(19) Europäisches Patentamt
European Patent Office
Office européen des brevets

(11) Veröffentlichungsnummer : **0 342 159 B1**

(12) # EUROPÄISCHE PATENTSCHRIFT

(45) Veröffentlichungstag der Patentschrift : **01.09.93 Patentblatt 93/35**

(51) Int. Cl.$^5$ : **C09B 56/14,** D06P 1/14, D06P 3/87

(21) Anmeldenummer : **89810338.7**

(22) Anmeldetag : **01.05.89**

(54) **Wasserlösliche Phthalocyaninverbindungen, Verfahren zu ihrer Herstellung und ihre Verwendung.**

(30) Priorität : **11.05.88 CH 1786/88**

(43) Veröffentlichungstag der Anmeldung : **15.11.89 Patentblatt 89/46**

(45) Bekanntmachung des Hinweises auf die Patenterteilung : **01.09.93 Patentblatt 93/35**

(84) Benannte Vertragsstaaten : **BE CH DE ES FR GB IT LI**

(56) Entgegenhaltungen :
**DE-B- 1 176 300**
**DE-C- 945 944**
**FR-A- 2 384 883**
**GB-A- 1 022 751**
**GB-A- 1 220 143**

(73) Patentinhaber : **CIBA-GEIGY AG**
**Klybeckstrasse 141**
**CH-4002 Basel (CH)**

(72) Erfinder : **Schaulin, Rudolf, Dr.**
**Schäferstrasse 62**
**CH-4125 Riehen (CH)**

EP 0 342 159 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue wasserlösliche Phthalocyaninverbindungen, Verfahren zu deren Herstellung sowie deren Verwendung zum Färben und Bedrucken von Fasermaterialien, insbesondere von textilen Fasermaterialien.

Gegenstand der vorliegenden Erfindung sind neue wasserlösliche Phthalocyaninverbindungen der Formel

(1) 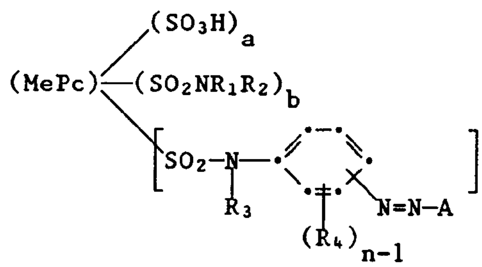 ,

worin $R_1$ und $R_2$ gleich oder voneinander verschieden sind und jeweils Wasserstoff, Hydroxyalkyl mit 2 oder 3 Kohlenstoffatomen, Carboxyalkyl mit 1 bis 3 Kohlenstoffatomen im Alkylteil oder Phenyl bedeuten, oder $R_1$ und $R_2$ zusammen mit dem Stickstoffatom einen heterocyclischen Ring mit gegebenenfalls weiteren Heteroatomen bedeuten,
$R_3$ Wasserstoff oder Methyl,
$R_4$ Wasserstoff, Alkyl oder Alkoxy mit jeweils 1 bis 5 Kohlenstoffatomen, $-NHCOR_6$, worin $R_6$ Alkyl oder Hydroxyalkyl mit jeweils 1 bis 3 Kohlenstoffatomen oder gegebenenfalls substituiertes Phenyl ist, oder Sulfo, Me ein koordinativ gebundenes Metallatom,
Pc ein (a+b+c)-wertiger Phthalocyaninrest,
n gleich 1 bis 3,
A ein monosubstituierter Phenylrest, ein Naphthylrest, ein Rest der Formel

(2) 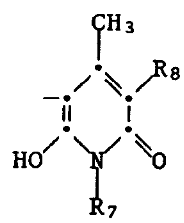 ,

worin $R_7$ Alkyl mit 1 bis 4 Kohlenstoffatomen und $R_8$ -CN, $-CONH_2$ oder $-CH_2SO_3H$ ist,
oder ein Rest der Formel

(2a) 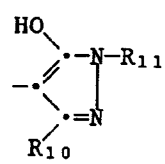 ,

worin $R_{10}$ für $-NH_2$, -COOH, Methyl oder Aethyl steht und $R_{11}$ gegebenenfalls durch Sulfo substituiertes 1- oder 2-Naphthyl oder unsubstituiertes oder durch $C_1$-$C_3$-Alkyl, $C_1$-$C_3$-Alkoxy, Chlor, Sulfo, Methylsulfonyl, Acetylamino, Hydroxy und/oder Carboxy substituiertes Phenyl ist,
a gleich 1 bis 1,5,
b gleich 0,5 bis 1,5,
c gleich 1 bis 2
und die Summe aus (a+b+c) 2,5 bis 4 ist.

Die Substituenten $R_1$ und $R_2$, die gleich oder voneinander verschieden sind, haben die Bedeutung Wasserstoff, Hydroxyalkyl mit 2 bis 5 Kohlenstoffatomen, wie z.B. Hydroxyethyl, Hydroxy-n-propyl, Hydroxy-n-butyl und Hydroxy-n-pentyl, sowie die entsprechenden verzweigten Hydroxyalkylreste; Carboxyalkyl mit 1 bis 5 Kohlenstoffatomen im Alkylteil, wie z.B. Carboxymethyl, Carboxyäthyl, Carboxy-n-propyl, Carboxy-n-butyl oder Carboxy-n-pentyl, sowie die entsprechenden Carboxyalkylreste, deren Alkylteil verzweigt ist; oder Phenyl.

Bevorzugt als Substituenten $R_1$ und $R_2$ sind Wasserstoff; Hydroxyäthyl oder Carboxyalkyl mit 1 oder 2 Kohlenstoffatomen im Alkylrest ($-CH_2COOH$, $-CH_2CH_2COOH$) oder Phenyl, wobei als besonders bevorzugte Kombination einer der Substituenten $R_1$ oder $R_2$ Wasserstoff und der andere einer der angegebenen Substituenten ist.

Bilden $R_1$ und $R_2$ zusammen mit dem Stickstoffatom, an dem sie gebunden sind, einen heterocyclischen Ring, so handelt es sich vorzugsweise um gesättigte heterocyclische 5- oder 6-Ringe, die als weitere Heteroatome Stickstoff-, Schwefel- und/oder Sauerstoffatome enthalten können. Beispiele für heterocyclische Reste $-NR_1R_2$ sind also Pyrrolidino, Piperidino, Pipecolino, Morpholino, Thiomorpholino oder Piperazino, wobei Pyrrolidino, Piperidino, Morpholino und Thiomorpholino bevorzugt sind.

$R_3$ ist Methyl oder vorzugsweise Wasserstoff.

Als $C_1$-$C_5$-Alkyl kommen für $R_4$ in den Verbindungen der Formel (1) beispielsweise in Betracht: Methyl, Aethyl, Propyl, Isopropyl, n-Butyl, Isobutyl, sek.-Butyl, tert.-Butyl, Pentyl oder Isopentyl. Bevorzugt sind die genannten Alkylreste mit 1 bis 3 Kohlenstoffatomen, insbesondere Methyl.

Als $C_1$-$C_5$-Alkoxy kommen für $R_4$ beispielsweise in Betracht: Methoxy, Aethoxy, Propoxy, Isopropoxy, n-Butoxy, Isobutoxy, sek.-Butoxy, tert.- Butoxy, Pentoxy oder Isopentoxy. Bevorzugt sind die genannten Alkoxyreste mit 1 bis 3 Kohlenstoffatomen, insbesondere Methoxy.

Als $-NHCOR_6$ für $R_4$ in den Verbindungen der Formel (1) kommen beispielsweise Substituenten in Betracht wie $-NHCOCH_3$, $-NHCOCH_2CH_3$, $-NHCOCH_2CH_2CH_3$, $-NHCOCH_2OH$, $-NHCOCH_2CH_2OH$, $-NHCOCH_2CH_2CH_2OH$ oder

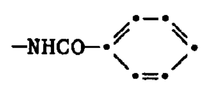,

worin der Phenylring gegebenenfalls substituiert sein kann, z.B. mit Methyl oder Halogen. Bevorzugte Substituenten $-NHCOR_6$ sind $-NHCOCH_3$, $-NHCOCH_2OH$ oder $-NHCOC_6H_5$.

Die Bedeutung Sulfo im Substituent $R_4$ umfasst sowohl die freie Säureform ($-SO_3H$) als auch die Salzform, wobei insbesondere Alkalimetallsalze (Li, Na, K) oder Ammoniumsalze in Frage kommen.

Der Rest A, gegebenenfalls auch die Kupplungskomponente, ist als monosubstituierter Phenylrest ein solcher mit den Substituenten Alkyl oder Alkoxy mit jeweils 1 bis 5, vorzugsweise 1 bis 3 Kohlenstoffatomen, wobei als Einzelsubstituenten solche in Frage kommen, wie sie für $R_4$ angegeben sind; weitere Substituenten können Hydroxyl, Carboxyl oder Sulfo sein.

Als Naphthalinrest kann A einen oder mehrere der für A als Phenylrest genannten Substituenten, z.B. 1 bis 4, vorzugsweise 1 oder 2, enthalten.

Als koordinativ gebundenes Metallatom ist Me in den Verbindungen der Formel (1) beispielsweise ein Eisen-, Kobalt-, Nickel- und insbesondere ein Kupferatom.

Pc ist die Kurzform für einen (a+b+c)-wertigen Phthalocyaninrest.

Der Index a weist vorzugsweise einen (Durchschnitts)-Wert 1 bis 1,2 und besonders bevorzugt den Wert 1 auf; der Index b hat bevorzugt einen (Durchschnitts)-Wert 0,5 bis 1 und der Index c weist vorzugswseise einen (Durchschnitts)-Wert 1 bis 1,2 auf.

Bevorzugt sind solche Verbindungen der Formel (1) worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder $R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann, $R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo und Me ein koordinativ gebundenes Eisen-, Kobalt-, Nickel- und insbesondere Kupferatom ist, und Pc, $R_3$, a, b, c und n die angegebenen Bedeutungen haben.

Besonders bevorzugte Verbindungen der Formel (1) entsprechen der Formel

(3) 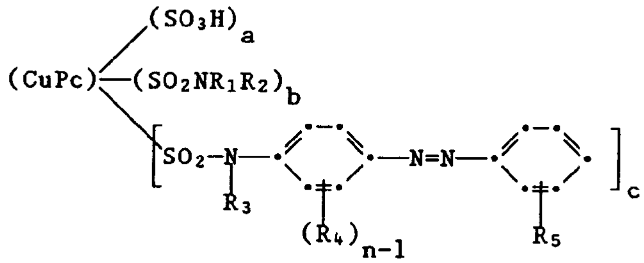 ,

worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder $R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann, $R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo, $R_5$ Alkyl oder Alkoxy mit 1 bis 3 Kohlenstoffatomen, wie sie beispielsweise für $R_4$ angegeben sind, Hydroxyl, Carboxyl oder Sulfo, und Pc, $R_3$, a, b, c und n die angegebenen Bedeutungen haben.

Weiterhin bevorzugte Verbindungen der Formel (1) entsprechen den Formeln

(4) 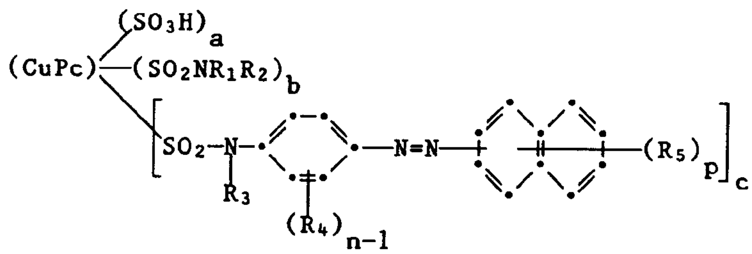

und

(5) 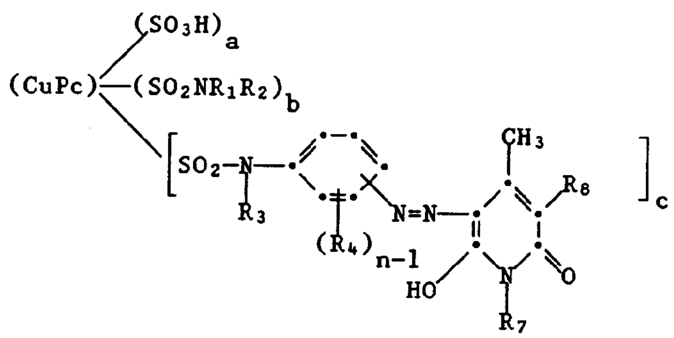 ,

worin $R_7$ Alkyl mit 1 bis 4 Kohlenstoffatomen, $R_8$ -CN, $-CONH_2$ oder $-CH_2SO_3H$ und p 1 bis 4 ist und $R_1$, $R_2$, $R_3$, $R_4$, $R_5$, a, b, c und n die angegebenen Bedeutungen haben.

Weiterhin zu erwähnen sind die Verbindungen der Formeln

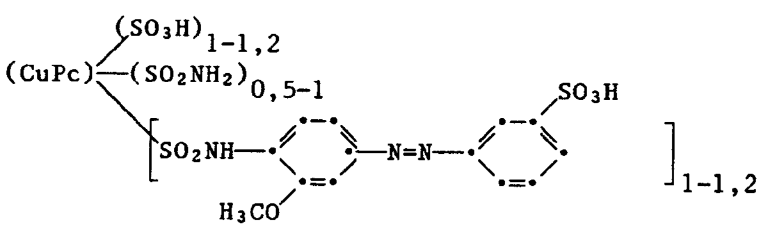 ,

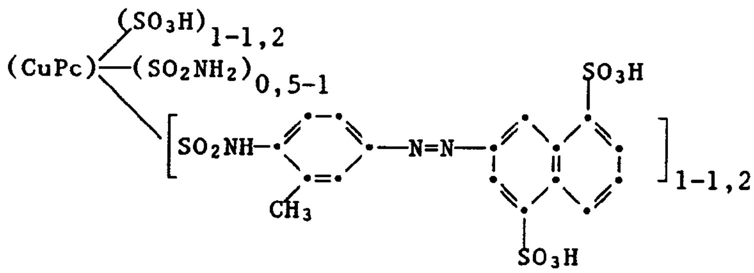

und

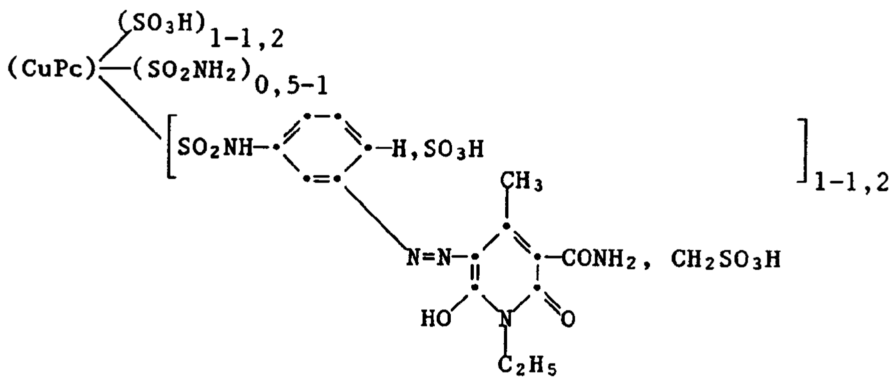

Das Verfahren zur Herstellung der Verbindungen der Formel (1) - und dies ist ein weiterer Gegenstand der vorliegenden Erfindung - ist dadurch gekennzeichnet, dass man Metallphthalocyaninsulfochloride der Formel

(6) 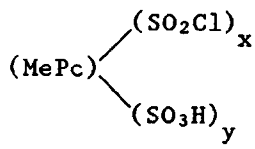 ,

worin Me ein koordinativ gebundenes Metallatom, x 2,5 bis 4, y 0 bis 1,5 und die Summe aus (x+y) 2,5 bis 4, vorzugsweise 2,5 bis 3 ist, mit Verbindungen, die primäre oder sekundäre Aminogruppen aufweisen, der Formeln

(7) 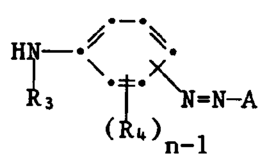

und (8) $HNR_1R_2$,
worin $R_1$, $R_2$, $R_3$, $R_4$, A, Me, Pc und n die unter Formel (1) angegebenen Bedeutungen haben,
in wässrigem Medium bei Temperaturen von 0 bis 100°C unter Einhaltung eines pH-Wertes von 5 bis 10 umsetzt (kondensiert) und anschliessend gegebenenfalls sauer oder alkalisch hydrolysiert.

Die Durchführung des erfindungsgemässen Verfahrens erfolgt bevorzugt bei 0 bis 40°C und einem pH-Wert im Bereich von 5 bis 8. Als Kondensationshilfsmittel sind stickstoffhaltige Verbindungen, wie z.B. Pyridin, Nicotinsäure oder Imidazol geeignet.

Die Verbindungen der Formeln (7) und (8) können gleichzeitig oder nacheinander mit den Phthalocyaninsulfochloriden der Formel (6) umgesetzt werden, wobei in der Regel zuerst mit den Aminogruppen enthaltenden Azofarbstoffen der Formel (7) und dann mit den Aminen der Formel (8) umgesetzt wird. Sie werden in (b)-

bzw. (c)-molaren Mengen bezogen auf die Verbindung der Formel (6), vorzugsweise auch in 0,1- bis 1-fachem molaren Ueberschuss eingesetzt.

Die alkalische Hydrolyse kann mit Alkalimetallhydroxiden, -carbonaten oder -bicarbonaten oder Ammoniak oder Aminen, die saure Hydrolyse mit Mineralsäuren, insbesondere Salz- oder Schwefelsäure, durchgeführt werden.

Ein alternatives Herstellungsverfahren zur Herstellung der Verbindungen der Formel (1) besteht darin, die Phthalocyaninsulfochloride der Formel

(6) 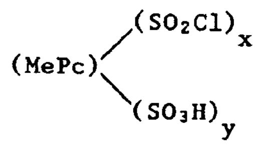 ,

worin x 2,5 bis 4, y 0 bis 1,5 und die Summe aus x+y 2,5 bis 4, vorzugsweise 2,5 bis 3 ist, gleichzeitig oder nacheinander mit Aminen der Formeln

(9) 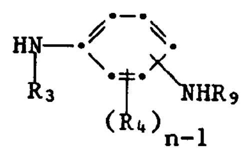

und (8) $HNR_1R_2$,
worin $R_9$ eine Schutzgruppe, z.B. Acetyl, ist und $R_1$, $R_2$, $R_3$, $R_4$, Me, Pc und n die angegebenen Bedeutungen haben, in wässrigem Medium bei Temperaturen von 0 bis 100°C unter Einhaltung eines pH-Wertes von 5 bis 10 umsetzt, anschliessend die Schutzgruppe abspaltet, die entstehende Aminogruppe diazotiert und die Diazoverbindung dann auf eine Kupplungskomponente A kuppelt.

Die als Ausgangsverbindungen verwendeten Phthalocyaninsulfochloride der Formel (6) sind dem Fachmann bekannt oder können nach an sich bekannten Verfahren (Umsetzung des Metall-Phthalocyanins mit Chlorsulfonsäure und/oder Thionylchlorid bei erhöhter Temperatur) hergestellt werden (s. z.B. K. Venkataraman, The Chemistry of Synthetic Dyes, Vol. V, S. 261 (1971), Academic Press, New York/London: F.M. Moser, A.L. Thomas, The phthalocyanines, Vol. II, S. 20-22, CRC Press; 1983).

Bei den Verbindungen der Formel (7) handelt es sich ebenfalls um bekannte, in der Regel gelbe Azofarbstoffe mit freier primärer oder sekundärer Aminogruppe. Die Aminoverbindungen der Formeln (8) und (9) sind allgemein bekannt und leicht zugänglich.

Ein weiterer Gegenstand der vorliegenden Erfindung ist die Verwendung der Phthalocyaninverbindungen der Formel (1), gegebenenfalls auch Mischungen dieser Verbindungen, zum Färben oder Bedrucken von stickstoffhaltigen und insbesondere hydroxylgruppenhaltigen Fasermaterialien.

Die erfindungsgemässen Phthalocyaninverbindungen (Phthalocyanin-Azofarbstoffe) der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Verbindungen (Farbstoffen) der Formel (1) gefärbt werden.

Man erhält egale Färbungen in brillant-grünen Farbtönen mit guten Allgemeinechtheiten, insbesondere guten Reib-, Nass-, Nasssreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sogenannten Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbededingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing).

Aus der FR-A-2 384 883 sind Phthalocyaninfarbstoffe bekannt, welche sich von den erfindungsgemässen Farbstoffen hinsichtlich des Fehlens von mindestens einem Substituenten des Phthalocyaninrestes unterscheiden.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 14,6 Teile Kupferphthalocyaninsulfochlorid (mit einer durchschnittlichen Anzahl von 2,5 Sulfochloridgruppen im Molekül) werden in 500 Teilen Wasser angerührt. Zu dieser Suspension gibt man 12 Teile der Verbindung der Formel

(101) 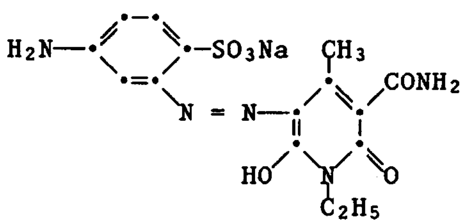

und 1 Teil Pyridin. Das Reaktionsgemisch wird unter Konstanthalten des pH-Wertes bei 5,5 mit 1N-Ammoniumhydroxydlösung während 4 Stunden bei 20 bis 25°C, dann 2 Stunden bei 30 bis 35°C und schliesslich 2 Stunden bei 40 bis 45°C gerührt. beschliessend wird der pH-Wert mit 1N-Ammoniumhydroxydlösung auf einen pH-Wert von 8 gestellt und eine weitere Stunde bei 40 bis45°C gerührt. Es werden dazu etwa 70 Teile 1N-Ammoniumhydroxydlösung verbraucht.

Der gebildete Farbstoff wird dann mit 60 Teilen Kochsalz ausgefällt, abfiltriert und mit 10%iger wässriger Natriumchloridlösung gewaschen. Der Filterrückstand wird mit heissem Aethanol angeschlämmt, erneut filtriert und mit heissem Aethanol solange gewaschen, bis das Filtrat farblos ist.

Nach dem Trocknen erhält man 30 Teile des Farbstoffes der Formel

(102) 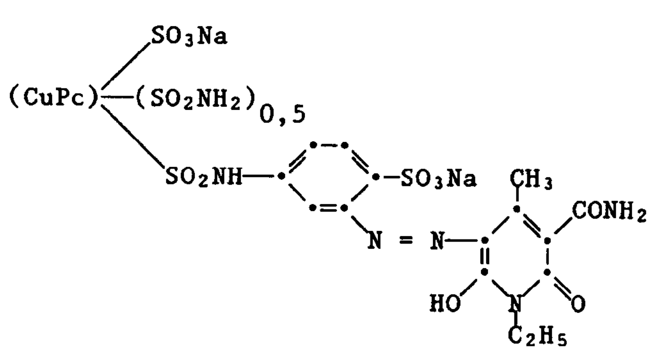 .

Der Farbstoff färbt Papier, cellulosische Textilfasermaterialien, insbesondere solche aus Baumwolle und Leder, in brillant-grünen Farbtönen.

In analoger Weise kann man auch die Farbstoffe der Formeln

(103) 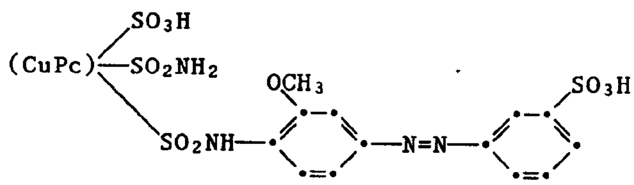

und

(104) 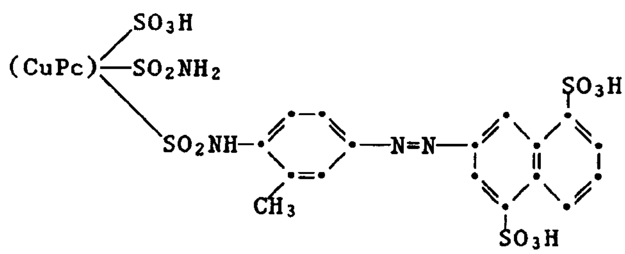

herstellen.

Beispiel 2: 14,6 Teile Kupferphthalocyaninsulfochlorid (mit einer durchschnittlichen Anzahl von 2,5 Sulfochloridgruppen im Molekül) werden in 500 Teilen Wasser angerührt. Zu dieser Suspension gibt man 12 Teile der Verbindung der Formel

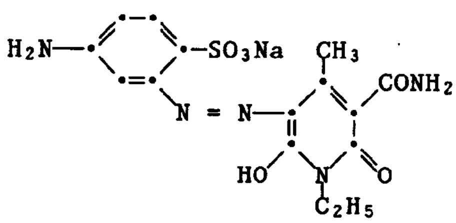

und 1 Teil Pyridin. Das Reaktionsgemisch wird unter Konstanthalten des pH-Wertes bei 7-7,5 mit 1N-Ammoniumhydroxydlösung während 4 Stunden bei 0 bis 5°C, dann 2 Stunden bei 20 bis 25°C und schliesslich 2 Stunden bei 35 bis 40°C gerührt. Anschliessend wird der pH-Wert mit 1N-Ammoniumhydroxydlösung auf einen pH-Wert von 8 gestellt und eine weitere Stunde bei 40 bis45°C gerührt. Es werden dazu etwa 70 Teile 1N-Ammoniumhydroxydlösung verbraucht.

Der gebildete Farbstoff wird dann mit 60 Teilen Kochsalz ausgefällt, abfiltriert und mit 10%iger wässriger Natriumchloridlösung gewaschen. Der Filterrückstand wird mit heissem Aethanol angeschlämmt, erneut filtriert und mit heissem Aethanol solange gewaschen, bis das Filtrat farblos ist.

Nach dem Trocknen erhält man 30 Teile des salzhaltigen Farbstoffes der Formel

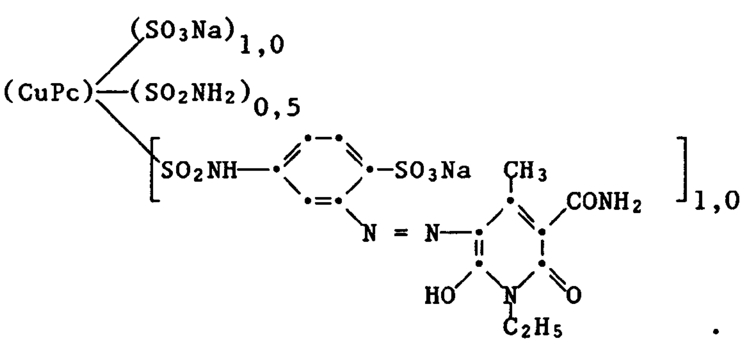

Der Farbstoff färbt Papier, cellulosische Textilfasermaterialien, insbesondere solche aus Baumwolle und Leder, in brillant-grünen Farbtönen.

Beispiel 3: 43,6 Teile eines Kupferphthalocyanin-sulfochlorids, das pro Molekül durchschnittlich ca. 1,7 Sulfochlorid-Gruppen und ca. 1,0 Sulfonsäure-Gruppen enthält, werden in 400 Teilen Eiswasser angeschlämmt. Zu dieser Suspension gibt man eine Lösung von 21 Teilen des Monoazofarbstoffes 3-Sulfo-2'-acetamido-4'-amino-azobenzol (Natriumsalz) in 350 Teilen Eiswasser und 1,0 Teilen Pyridin. Das Reaktionsgemisch wird unter Konstanthalten des pH-Wertes bei 7,5-8,0 mit 1N Ammoniumhydroxidlösung während 4 Stunden bei 0 bis 5°C, dann 2 Stunden bei 20 bis 25°C und schliesslich 2 Stunden bei 35 bis 40°C gerührt. beschliessend wird der pH-Wert mit 1N-Ammoniumhydroxydlösung auf 8 gestellt und eine weitere Stunde bei 40 bis 45°C gerührt. Es werden dazu etwa 70 Teile 1N-Ammoniumhydroxydlösung verbraucht.

Der gebildete Farbstoff wird dann mit Kochsalz ausgefällt, abfiltriert und mit wässriger Natriumchloridlösung gewaschen. Der Filterrückstand wird mit heissem Aethanol angeschlämmt, erneut filtriert und mit heissem Aethanol solange gewaschen, bis das Filtrat farblos ist.

Nach dem Trocknen erhält man 59 Teile des salzhaltigen Farbstoffes der Formel

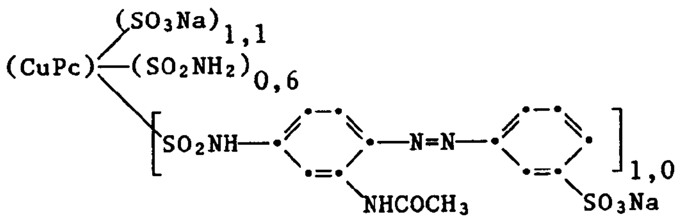

Beispiel 4: 23,1 Teile Kupferphthalocyanin-Base (Natriumsalz), die pro Molekül ca. 1,1 Sulfonsäure-Gruppen, ca. 0,7 -$SO_2NH_2$-Gruppen und ca. 1,1 Gruppen der Formel

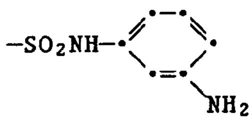

enthält (hergestellt in an sich bekannter Weise durch Sulfochlorierung von Kupferphthalocyanin und anschliessender Reaktion mit Ammoniak und 3-Aminoacetanilid, gefolgt von der Abspaltung der Acetylschutzgruppe), werden zu einer Lösung von 2 Teilen Natriumnitrit in 200 Teilen Wasser gegeben. Nach Zugabe von 100 Teilen Eis wird unter Rühren eine Lösung von 14 Teilen Salzsäure 30%ig in 50 Teilen Eiswasser bei 0 bis 2°C zugetropft. Die Suspension des Diazoniumsalzes wird anschliessend bei 0 bis 4°C zu einer Lösung von 6,6 Teilen 6-Hydroxy-3-carbamoyl-4-methyl-1-äthylpyrid-2-on in 200 Teilen Eiswasser getropft. Während der Kupplung wird der pH-Wert des Reaktionsgemisches durch Zugabe von 30%iger Natriumhydroxidlösung bei 9 bis 9,5 gehalten. Nach beendeter Reaktion wird die Reaktionslösung mit Natriumchlorid versetzt, der ausgesalzene Farbstoff abfiltriert, mit Natriumchloridlösung gewaschen und getrocknet. Man erhält den Farbstoff der Formel

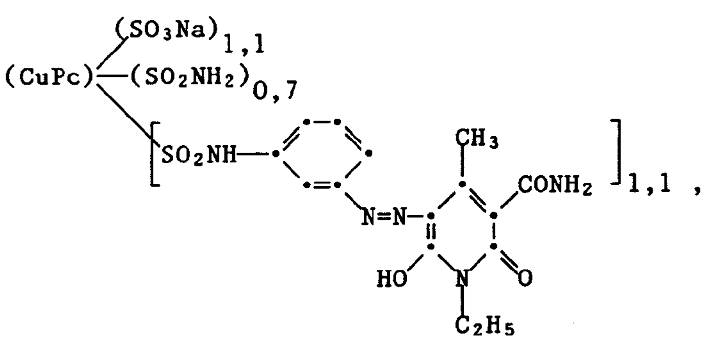

der Cellulosematerialien und Leder in brillanten Grüntönen mit guter Lichtechtheit färbt.

Beispiele 5 bis 10: Analog wie in den Beispielen 1 bis 3 beschrieben lassen sich die folgenden Farbstoffe herstellen, die Cellulosematerialien und Leder jeweils in brillanten grünen Tönen mit guten Allgemeinechtheiten färben:

| Beispiel Nr. | Farbstoff |
|---|---|
| 5 | 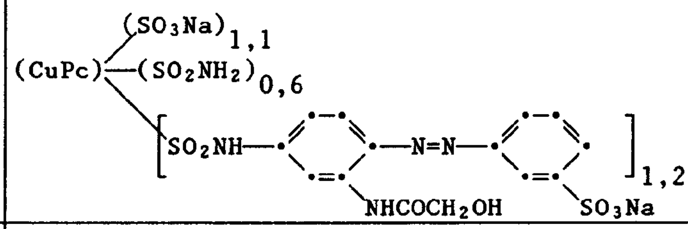 |
| 6 | 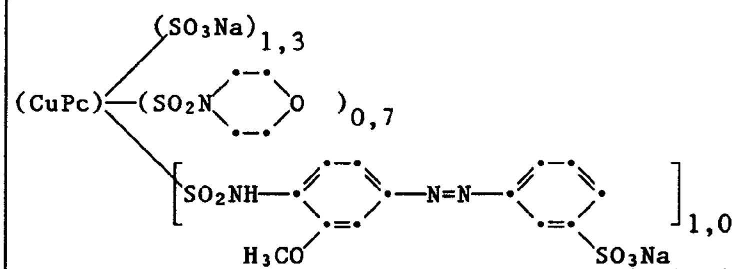 |
| 7 | 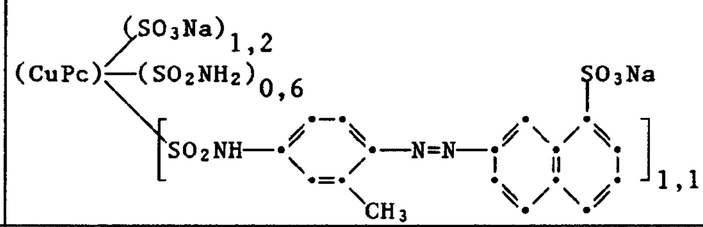 |
| 8 | 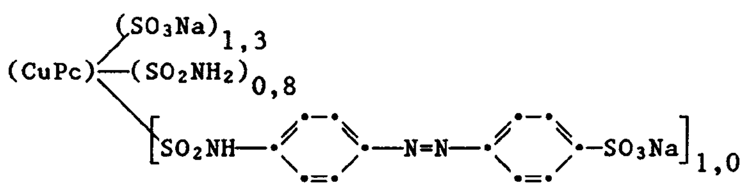 |
| 9 | 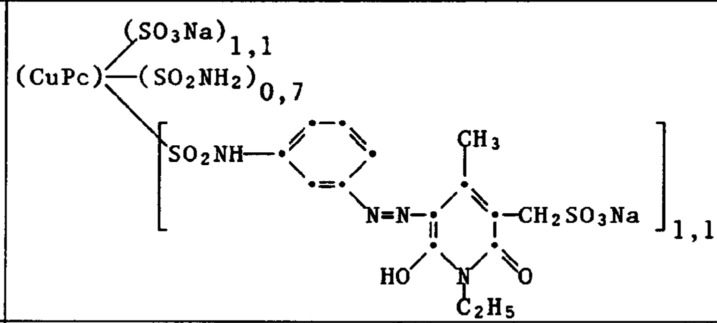 |
| 10 | 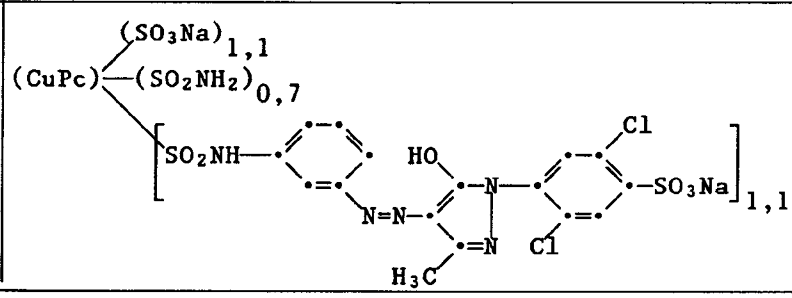 |

Färbevorschrift 1

10 Teile Baumwollgewebe (gebleicht und mercerisiert) werden bei ca. 30°C in ein Färbebad eingebracht, welches 200 Teile Wasser und 0,35 Teile Farbstoff des Beispiels 2 enthält. Die Flotte wird innerhalb von 30 Minuten auf 95°C erhitzt und 15 Minuten bei dieser Temperatur belassen. Dann werden 4 Teile Glaubersalz zugesetzt und noch weitere 45 Minuten bei 95°C gefärbt. Danach wird das Färbebad innerhalb von 15 Minuten auf 80°C abgekühlt und noch weitere 15 Minuten bei dieser Temperatur belassen. Die Färbung wird dann gründlich mit kaltem Wasser gespült und getrocknet.

Färbevorschrift 2

10 Teile einer Fasermischung aus Polyester und Baumwolle werden bei ca. 50°C in ein Färbebad eingebracht, welches 200 Teile Wasser, ein Farbstoffgemisch bestehend aus 0,05 Teilen C.I. Disperse Yellow 99, 0,5 Teilen C.I. Disperse Blue 60 und 0,2 Teilen des Farbstoffes gemäss Beispiel 3, 0,4 Teile Ammoniumsulfat sowie 0,2 Teile eines anionischen Dispersionsmittels (z.B. Formaldehyd-Kondensationsprodukt von Naphthalinsulfonsäure). Das Färbebad wird mit Ameisensäure auf einen pH-Wert von 5,5 eingestellt, 1 Teil Glaubersalz zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

Färbevorschrift 3

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

Färbevorschrift 4

Man verfährt wie in den Färbevorschriften 1 oder 2 beschrieben, gibt jedoch nach Abschluss des Färbevorgangs die kalt gespülte Färbung in ein frisches ca. 25°C warmes Bad, welches 200 Teile Wasser, 1 Teil Glaubersalz und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche

**Patentansprüche für folgende Vertragsstaaten : BE, DE, CH, LI, FR, GB, IT**

1. Verbindungen der Formel

(1) 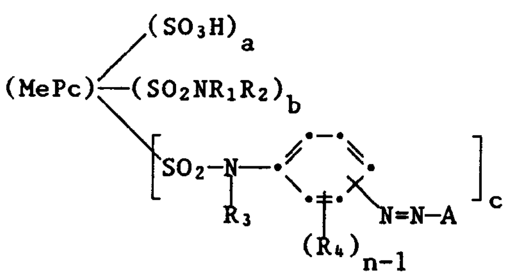 ,

worin $R_1$ und $R_2$ gleich oder voneinander verschieden sind und jeweils Wasserstoff, Hydroxyalkyl mit 2 oder 3 Kohlenstoffatomen, Carboxyalkyl mit 1 bis 3 Kohlenstoffatomen im Alkylteil oder Phenyl bedeuten, oder $R_1$ und $R_2$ zusammen mit dem Stickstoffatom einen heterocyclischen Ring mit gegebenenfalls wei-

teren Heteroatomen bedeuten,
$R_3$ Wasserstoff oder Methyl,
$R_4$ Wasserstoff, Alkyl oder Alkoxy mit jeweils 1 bis 5 Kohlenstoffatomen, $-NHCOR_6$, worin $R_6$ Alkyl oder Hydroxyalkyl mit jeweils 1 bis 3 Kohlenstoffatomen oder gegebenenfalls substituiertes Phenyl ist, oder Sulfo,
Me ein koordinativ gebundenes Metallatom,
Pc ein (a+b+c)-wertiger Phthalocyaninrest,
n gleich 1 bis 3,
A ein monosubstituierter Phenylrest, ein Naphthylrest, ein Rest der Formel

(2) 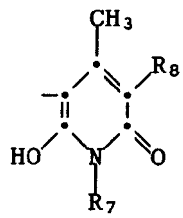 ,

worin $R_7$ Alkyl mit 1 bis 4 Kohlenstoffatomen und $R_6$ -CN, $-CONH_2$ oder $-CH_2SO_3H$ ist,
oder ein Rest der Formel

(2a) 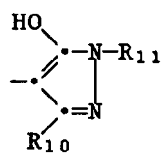 ,

worin $R_{10}$ für $-NH_2$, -COOH, Methyl oder Aethyl steht und $R_{11}$ gegebenenfalls durch Sulfo substituiertes 1- oder 2-Naphthyl oder unsubstituiertes oder durch $C_1$-$C_3$-Alkyl, $C_1$-$C_3$-Alkoxy, Chlor, Sulfo, Methylsulfonyl, Acetylamino, Hydroxy und/oder Carboxy substituiertes Phenyl ist,
a gleich 1 bis 1,5,
b gleich 0,5 bis 1,5,
c gleich 1 bis 2
und die Summe aus (a+b+c) 2,5 bis 4 ist.

2. Verbindungen nach Anspruch 1, dadurch gekennzeichnet, dass $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo und
Me ein koordinativ gebundenes Eisen-, Kobalt-, Nickel- und insbesondere Kupferatom ist, und
Pc, $R_3$, a, b, c und n die in Anspruch 1 angegebenen Bedeutungen haben.

3. Verbindungen nach Anspruch 1 oder 2, dadurch gekennzeichnet, dass sie der Formel

(3) 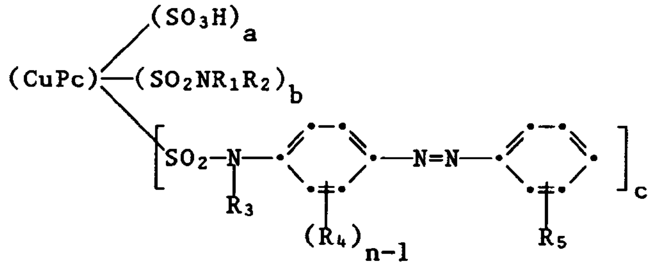 ,

worin $R_1$ und $R_2$ gleich oder voneinander verschieden sind und jeweils Wasserstoff, Hydroxyäthyl, Carboxyalkyl mit 1 oder 2 Kohlenstoffatomen im Alkylrest oder Phenyl sind oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo und
Pc, $R_3$, a, b, c und n die angegebenen Bedeutungen haben.

4. Verbindungen nach Anspruch 1 oder 2, dadurch gekennzeichnet, dass sie den Formeln

(4)

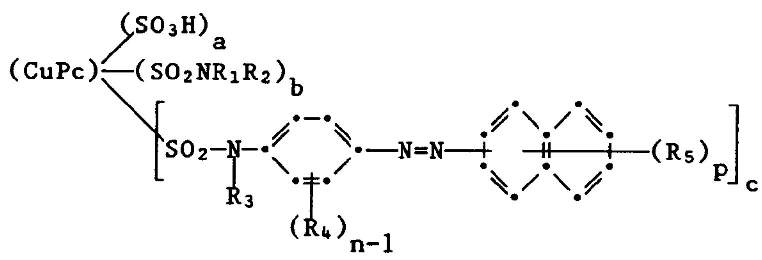

und

(5)

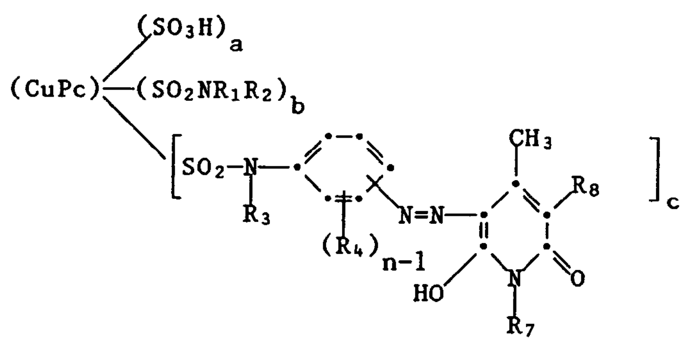

entsprechen, worin $R_7$ Alkyl mit 1 bis 4 Kohlenstoffatomen, $R_8$ -CN, $-CONH_2$ oder $-CH_2SO_3H$ und p 1 bis 4 ist und $R_1$, $R_2$, $R_3$, $R_4$, $R_5$, a, b, c und n die in Anspruch 1 angegebenen Bedeutungen haben.

5. Verbindungen nach einem der Ansprüche 1 bis 4, dadurch gekennzeichnet, dass a und c unabhängig voneinander je 1 bis 1,2 und b 0,5 bis 1 sind.

6. Verbindungen nach Anspruch 1, dadurch gekennzeichnet, dass sie der Formel

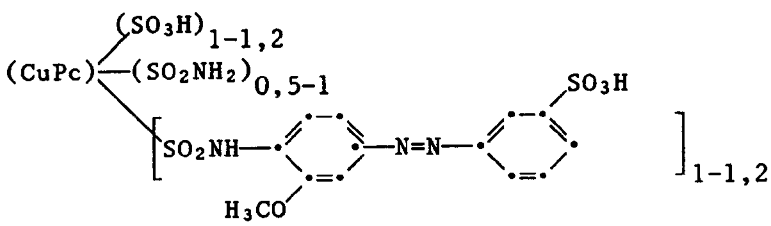

entsprechen.

7. Verbindungen nach Anspruch 1, dadurch gekennzeichnet, dass sie der Formel

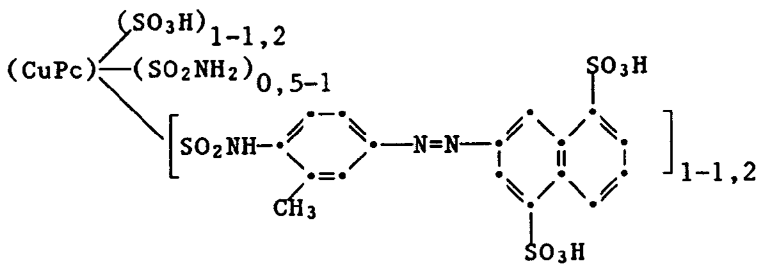

entsprechen.

**8.** Verbindungen nach Anspruch 1, dadurch gekennzeichnet, dass sie der Formel

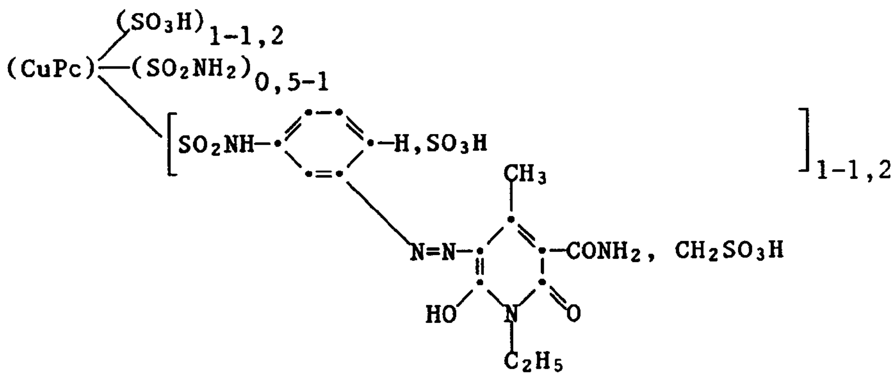

entsprechen.

**9.** Verfahren zur Herstellung der Verbindungen nach Anspruch 1, dadurch gekennzeichnet, dass man ein Metallphthalocyaninsulfochlorid der Formel

(6) 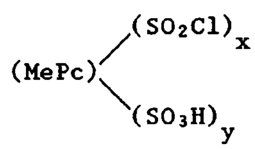 ,

worin x 2,5 bis 4, y 0 bis 1,5 und (x+y) 2,5 bis 4, vorzugsweise 2,5 bis 3 ist, gleichzeitig oder nacheinander mit Aminen der Formeln

(7) 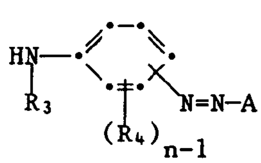

und (8) $NHR_1R_2$,
worin $R_1$, $R_2$, $R_3$, $R_4$, A, Me, Pc und n die in Anspruch 1 angegebenen Bedeutungen haben,
in wässrigem Medium bei Temperaturen von 0 bis 100°C unter Einhaltung eines pH-Wertes von 5 bis 10 umsetzt, und anschliessend gegebenenfalls mit einer Säure oder einer alkalischen Verbindung hydrolysiert.

**10.** Verfahren zur Herstellung der Verbindungen nach Anspruch 1, dadurch gekennzeichnet, dass man ein Metallphthalocyaninsulfochlorid der Formel

(6) 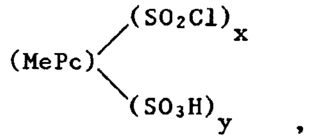

worin x 2,5 bis 4, y 0 bis 1,5 und die Summe (x+y) 2,5 bis 4, vorzugsweise 2,5 bis 3 ist, gleichzeitig oder nacheinander mit Aminen der Formeln

(9) 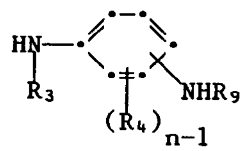

und (8) $HNR_1R_2$,
worin $R_9$ eine Schutzgruppe, z.B. Acetyl, ist und $R_1$, $R_2$, $R_3$, $R_4$, Me, Pc und n die in Anspruch 1 angegebenen Bedeutungen haben, in wässrigem Medium bei Temperaturen von 0 bis 100°C unter Einhaltung eines pH-Wertes von 5 bis 10 umsetzt, anschliessend die Schutzgruppe abspaltet, die entstehende Aminogruppe diazotiert und die Diazoverbindung dann auf eine Kupplungskomponente A kuppelt.

**11.** Verwendung der Farbstoffe nach einem der Ansprüche 1 bis 8 oder der nach den Verfahren gemäss den Ansprüchen 9 und 10 hergestellten Farbstoffe zum Färben und Bedrucken von stickstoffhaltigen und insbesondere cellulosischen Fasermaterialien.

**12.** Verwendung nach Anspruch 11, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

**13.** Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

**Patentansprüche für folgenden Vertragsstaat : ES**

**1.** Verfahren zur Herstellung von Verbindungen der Formel

(1) 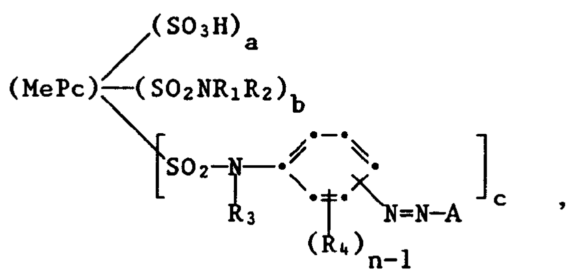

worin $R_1$ und $R_2$ gleich oder voneinander verschieden sind und jeweils Wasserstoff, Hydroxyalkyl mit 2 oder 3 Kohlenstoffatomen, Carboxyalkyl mit 1 bis 3 Kohlenstoffatomen im Alkylteil oder Phenyl bedeuten, oder $R_1$ und $R_2$ zusammen mit dem Stickstoffatom einen heterocyclischen Ring mit gegebenenfalls weiteren Heteroatomen bedeuten,
$R_3$ Wasserstoff oder Methyl,
$R_4$ Wasserstoff, Alkyl oder Alkoxy mit jeweils 1 bis 5 Kohlenstoffatomen, $-NHCOR_6$, worin $R_6$ Alkyl oder Hydroxyalkyl mit jeweils 1 bis 3 Kohlenstoffatomen oder gegebenenfalls substituiertes Phenyl ist, oder Sulfo,

Me ein koordinativ gebundenes Metallatom,
Pc ein (a+b+c)-wertiger Phthalocyaninrest,
n gleich 1 bis 3,
A ein monosubstituierter Phenylrest, ein Naphthylrest, ein Rest der Formel

(2) 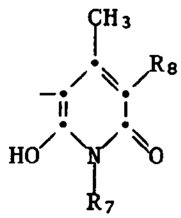 ,

worin $R_7$ Alkyl mit 1 bis 4 Kohlenstoffatomen und $R_8$ -CN, -$CONH_2$ oder -$CH_2SO_3H$ ist,
oder ein Rest der Formel

(2a) 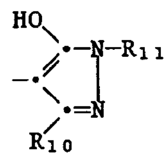 ,

worin $R_{10}$ für -$NH_2$, -COOH, Methyl oder Aethyl steht und $R_{11}$ gegebenenfalls durch Sulfo substituiertes 1- oder 2-Naphthyl oder unsubstituiertes oder durch $C_1$-$C_3$-Alkyl, $C_1$-$C_3$-Alkoxy, Chlor, Sulfo, Methylsulfonyl,
Acetylamino, Hydroxy und/oder Carboxy substituiertes Phenyl ist,
a gleich 1 bis 1,5,
b gleich 1 bis 2 und
c gleich 1 bis 2 und
die Summe aus (a+b+c) 2,5 bis 4 ist,
dadurch gekennzeichnet, dass man ein Metallphthalocyaninsulfochlorid der Formel

(6) 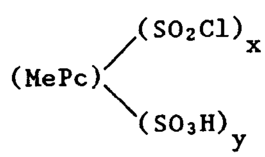 ,

worin x 2,5 bis 4, y 0 bis 1,5 und (x+y) 2,5 bis 4, vorzugsweise 2,5 bis 3 ist, gleichzeitig oder nacheinander mit Aminen der Formeln

(7) 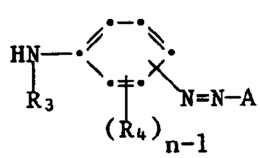

und (8) $HNR_1R_2$,
worin $R_1$, $R_2$, $R_3$, $R_4$, A, Me, Pc und n die oben angegebenen Bedeutungen haben,
in wässrigem Medium bei Temperaturen von 0 bis 100°C unter Einhaltung eines pH-Wertes von 5 bis 10 umsetzt, und anschliessend gegebenenfalls mit einer Säure oder einer alkalischen Verbindung hydrolysiert.

**2.** Verfahren nach Anspruch 1, dadurch gekennzeichnet, dass $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind oder

$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo und
Me ein koordinativ gebundenes Eisen-, Kobalt-, Nickel- und insbesondere Kupferatom ist, und
Pc, $R_3$, a, b, c und n die in Anspruch 1 angegebenen Bedeutungen haben.

**3.** Verfahren nach Anspruch 1 oder 2 zur Herstellung von Verbindungen der Formel

(3) 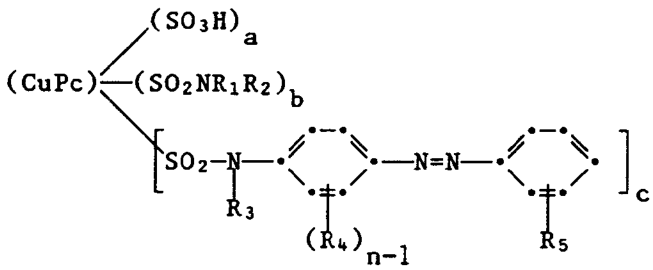 ,

worin $R_1$ und $R_2$ gleich oder voneinander verschieden sind und jeweils Wasserstoff, Hydroxyäthyl, Carboxyalkyl mit 1 oder 2 Kohlenstoffatomen im Alkylrest oder Phenyl sind oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo und
Pc, $R_3$, a, b, c und n die angegebenen Bedeutungen haben.

**4.** Verfahren nach Anspruch 1 oder 2 zur Herstellung von Verbindungen der Formeln

(4) 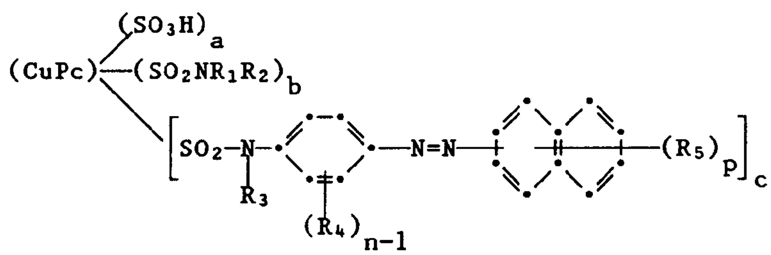

und

(5) 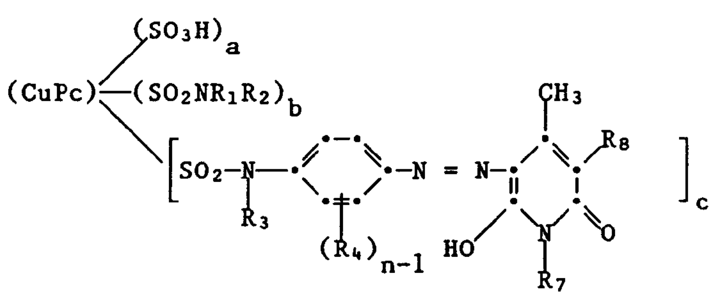

worin $R_7$ Alkyl mit 1 bis 4 Kohlenstoffatomen, $R_8$ -CN, $-CONH_2$ oder $-CH_2SO_3H$ und p 1 bis 4 ist und $R_1$, $R_2$, $R_3$, $R_4$, $R_5$, a, b, c und n die in Anspruch 1 angegebenen Bedeutungen haben.

**5.** Verfahren nach einem der Ansprüche 1 bis 4, dadurch gekennzeichnet, dass a und c unabhängig voneinander je 1 bis 1,2 und b 0,5 bis 1 sind.

6. Verfahren nach Anspruch 1 zur Herstellung von Verbindungen der Formel

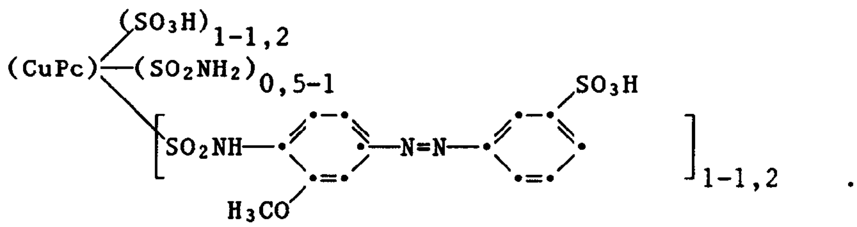

7. Verfahren nach Anspruch 1 zur Herstellung von Verbindungen der Formel

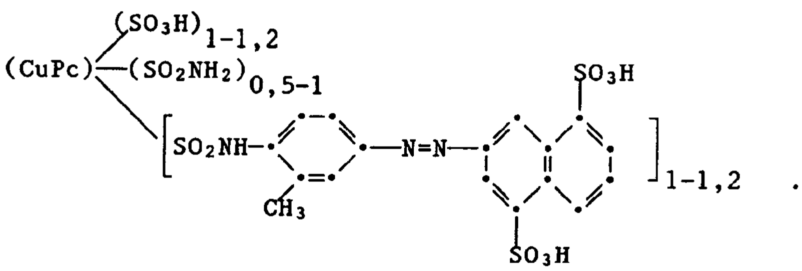

8. Verfahren nach Anspruch 1 zur Herstellung von verbindungen der Formel

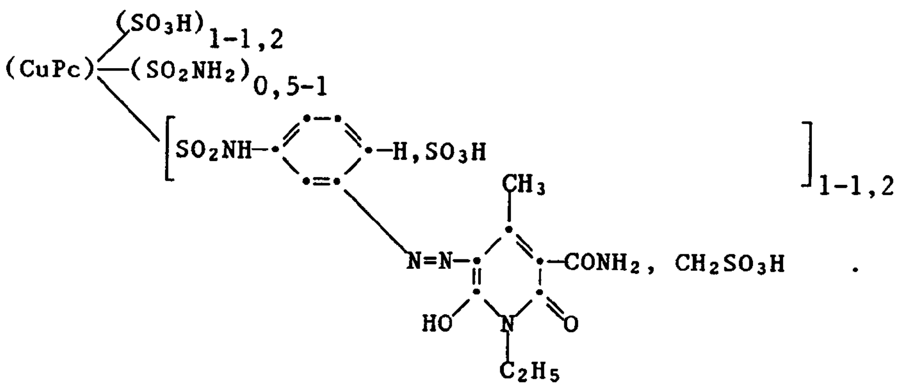

9. Verfahren zur Herstellung der Verbindungen der Formel (1) gemäss Anspruch 1, dadurch gekennzeichnet, dass man ein Metallphthalocyaninsulfochlorid der Formel

(6) 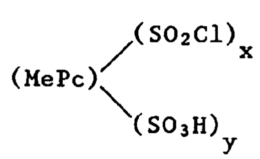 ,

worin x 2,5 bis 4, y 0 bis 1,5 und (x+y) 2,5 bis 4, vorzugsweise 2,5 bis 3 ist, gleichzeitig oder nacheinander mit Aminen der Formeln

(9) 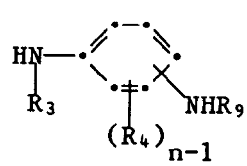

und (8) $HNR_1R_2$,

worin $R_9$ eine Schutzgruppe, z.B. Acetyl, ist und $R_1$, $R_2$, $R_3$, $R_4$, Me, Pc und n die in Anspruch 1 angegebenen Bedeutungen haben, in wässrigem Medium bei Temperaturen von 0 bis 100°C unter Einhaltung eines pH-Wertes von 5 bis 10 umsetzt, anschliessend die Schutzgruppe abspaltet, die entstehende Aminogruppe diazotiert und die Diazoverbindung dann auf eine Kupplungskomponente A kuppelt.

**10.** Verwendung der nach den Verfahren gemäss den Ansprüchen 1 bis 9 hergestellten Farbstoffe zum Färben und Bedrucken von stickstoffhaltigen und insbesondere cellulosischen Fasermaterialien.

**11.** Verwendung nach Anspruch 11, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

**12.** Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Claims

**Claims for the following Contracting States : BE, DE, CH, FR, GB, IT, LI**

**1.** A compound of the formula

(1)

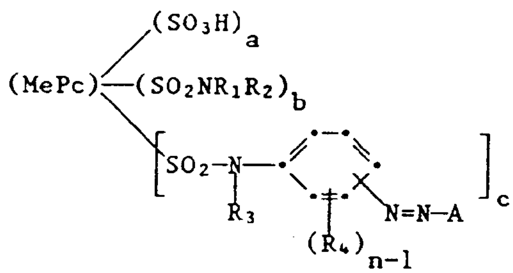

,

where $R_1$ and $R_2$ are identical to or different from one another and are each hydrogen, hydroxyalkyl of 2 or 3 carbon atoms, carboxyalkyl of 1 to 3 carbon atoms in the alkyl moiety or phenyl, or $R_1$ and $R_2$, together with the nitrogen atom, form a heterocyclic ring with or without further hetero atoms, $R_3$ is hydrogen or methyl, $R_4$ is hydrogen, alkyl or alkoxy each of 1 to 5 carbon atoms, $-NHCOR_6$, where $R_6$ is alkyl or hydroxyalkyl each of 1 to 3 carbon atoms or substituted or unsubstituted phenyl, or sulfo, Me is a coordinatively bonded metal atom, Pc is an (a+b+c)valent phthalocyanine radical, n is from 1 to 3, A is monosubstituted phenyl radical, a naphthyl radical, a radical of the formula

(2)

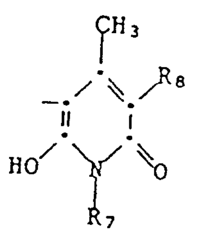

where $R_7$ is alkyl of 1 to 4 carbon atoms, and $R_6$ is -CN, $-CONH_2$ or $-CH_2SO_3H$, or a radical of the formula

(2a)

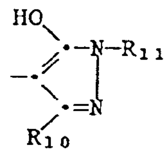

where $R_{10}$ is $-NH_2$, -COOH, methyl or ethyl, and $R_{11}$ is unsubstituted or sulfo-substituted 1- or 2-naphthyl or unsubstituted or $C_1$-$C_3$alkyl-, $C_1$-$C_3$alkoxy-, chlorine-, sulfo-, methylsulfonyl-, acetylamino-, hydroxyl- and/or carboxyl-substituted phenyl, a is from 1 to 1.5, b is from 0.5 to 1.5, c is from 1 to 2 and the sum of (a+b+c) is from 2.5 to 4.

2. A compound according to claim 1, wherein $R_1$ and $R_2$ are identical to or different from one another and are each hydrogen, hydroxyethyl, carboxyalkyl of 1 or 2 carbon atoms in the alkyl radical or phenyl, or $R_1$ and $R_2$, together with the nitrogen atoms, form a heterocyclic 5- or 6-membered ring which may contain nitrogen, sulfur and/or oxygen atoms as further hetero atoms, $R_4$ is alkyl or alkoxy each of 1 to 3 carbon atoms, $-NHCOCH_3$, $-NHCOCH_2OH$, $-NHCOC_6H_5$ or sulfo, Me is a coordinatively bonded iron, cobalt, nickel or in particular copper atom, and Pc, $R_3$, a, b, c and n are as defined in claim 1.

3. A compound according to claim 1 or 2, of the formula

(3)

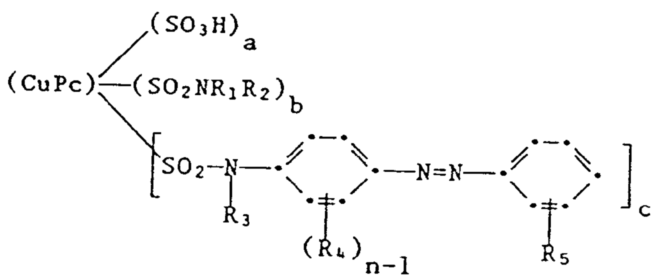

,

where $R_1$ and $R_2$ are identical or different from one another and are each hydrogen, hydroxyethyl, carboxyalkyl of 1 or 2 carbon atoms in the alkyl radical or phenyl, or $R_1$ and $R_2$, together with the nitrogen atom, form a heterocyclic 5- or 6-membered ring which may contain nitrogen, sulfur and/or oxygen atoms as further hetero atoms, $R_4$ is alkyl or alkoxy each of 1 to 3 carbon atoms, $-NHCOCH_3$, $-NHCOCH_2OH$, $-NHCOC_6H_5$ or sulfo, $R_5$ is alkyl or alkoxy of 1 to 3 carbon atoms, hydroxyl, carboxyl or sulfo, and Pc, $R_3$, a, b, c and n are as defined above.

4. A compound according to claim 1 or 2, of the formula

(4)

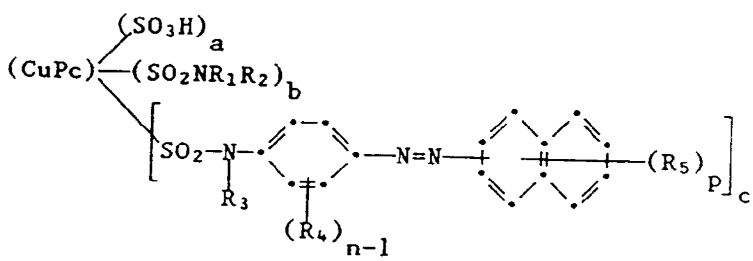

or

(5) 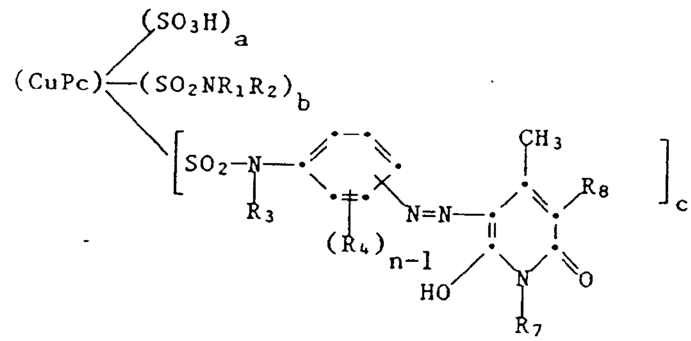

where $R_7$ is alkyl of 1 to 4 carbon atoms, $R_8$ is -CN, $-CONH_2$ or $-CH_2SO_3H$, p is from 1 to 4, and $R_1$, $R_2$, $R_3$, $R_4$, $R_5$, a, b, c and n are as defined in claim 1.

5. A compound according to any one of claims 1 to 4, wherein a and c are each independently of the other from 1 to 1.2 and b is from 0.5 to 1.

6. A compound according to claim 1, of the formula

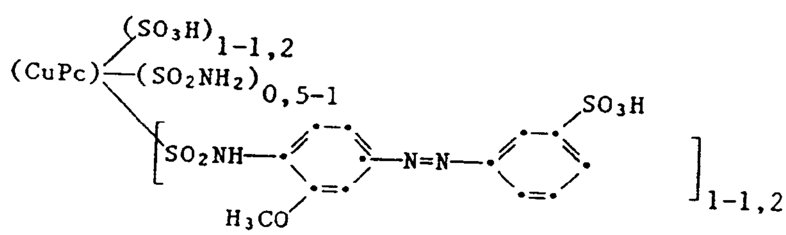

7. A compound according to claim 1, of the formula

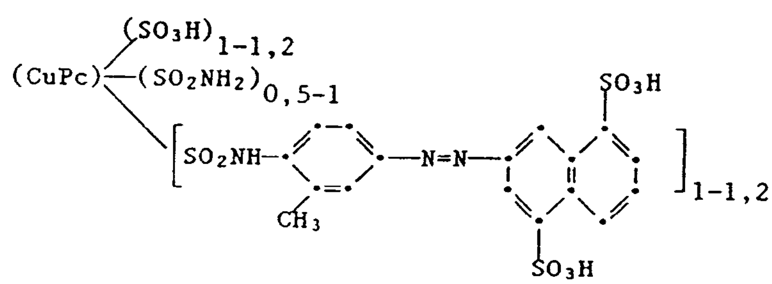

8. A compound according to claim 1, of the formula

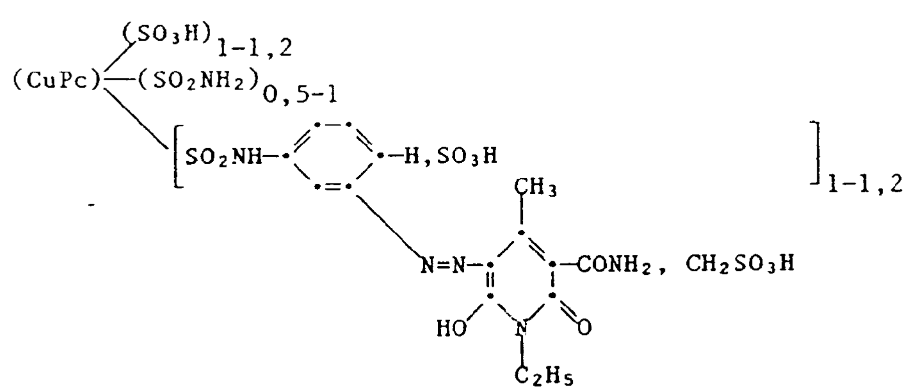

9. A process for preparing a compound according to claim 1, which comprises reacting a metal phthalocyaninesulfochloride of the formula

(6) 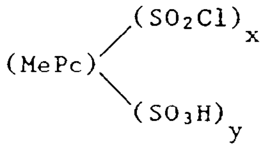 ,

where x is from 2.5 to 4, y is from 0 to 1.5 and (x+y) is from 2.5 to 4, preferably from 2.5 to 3, simultaneously or in succession with amines of the formulae

(7) 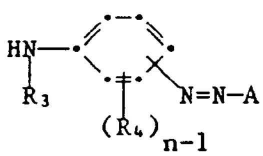

and (8) $HNR_1R_2$,
where $R_1$, $R_2$, $R_3$, $R_4$, A, Me, Pc and n are as defined in claim 1, in an aqueous medium at temperatures of 0 to 100°C by maintaining a pH of 5 to 10 and then performing an optional hydrolysis with an acid or an alkaline compound.

10. A process for preparing a compound according to claim 1, which comprises reacting a metal phthalocyaninesulfochloride of the formula

(6) 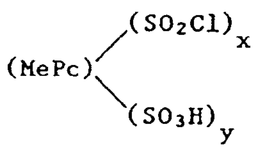 ,

where x is from 2.5 to 4, y is from 0 to 1.5 and the sum (x+y) is from 2.5 to 4, preferably from 2.5 to 3, simultaneously or in succession with amines of the formulae

(9) 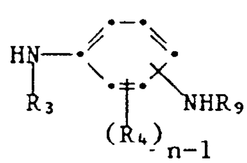

and (8) $HNR_1R_2$,
where $R_9$ is a protective group, for example acetyl, and $R_1$, $R_2$, $R_3$, $R_4$, Me, Pc and n are as defined in claim 1, in an aqueous medium at temperatures of 0 to 100°C by maintaining a pH of 5 to 10, then eliminating the protective group, diazotising the resulting amino group, and subsequently coupling the diazo compound onto a coupling component A.

11. The use of a dye according to any one of claims 1 to 8 or of a dye prepared by a process according to claim 9 or 10, for dyeing and printing nitrogen-containing and in particular cellulosic fibre materials.

12. The use according to claim 11, wherein a blend of synthetic fibres and a cellulosic fibre material, in particular a polyester/cotton blend fabric, is dyed in the presence of a disperse dye for the polyester fibres under the dyeing conditions for polyester fibres.

13. A process for dyeing a polyester/cotton blend fabric with a disperse dye and a direct dye, which comprises

using in a single-stage, one-bath process apart from the disperse dye a dye of the formula (1) according to claim 1 and dyeing from an aqueous liquor at temperatures within the range from 100 to 150°C, preferably 120 to 130°C, and at a pH between 4 and 7.5.

**Claims for the following Contracting State : ES**

1. A process for preparing a compound of the formula

(1) 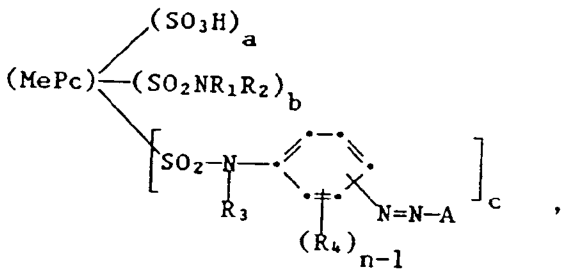

where $R_1$ and $R_2$ are identical to or different from one another and are each hydrogen, hydroxyalkyl of 2 or 3 carbon atoms, carboxyalkyl of 1 to 3 carbon atoms in the alkyl moiety or phenyl, or $R_1$ and $R_2$, together with the nitrogen atom, form a heterocyclic ring with or without further hetero atoms, $R_3$ is hydrogen or methyl, $R_4$ is hydrogen, alkyl or alkoxy each of 1 to 5 carbon atoms, $-NHCOR_6$, where $R_6$ is alkyl or hydroxyalkyl each of 1 to 3 carbon atoms or substituted or unsubstituted phenyl, or sulfo, Me is a coordinatively bonded metal atom, Pc is an (a+b+c)valent phthalocyanine radical, n is from 1 to 3, A is monosubstituted phenyl radical, a naphthyl radical, a radical of the formula

(2) 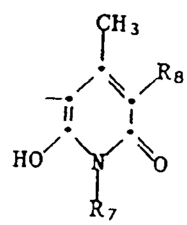 ,

where $R_7$ is alkyl of 1 to 4 carbon atoms, and $R_8$ is $-CN$, $-CONH_2$ or $-CH_2SO_3H$, or a radical of the formula

(2a) 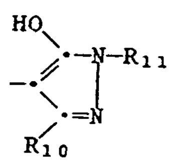 ,

where $R_{10}$ is $-NH_2$, $-COOH$, methyl or ethyl, and $R_{11}$ is unsubstituted or sulfo-substituted 1- or 2-naphthyl or unsubstituted or $C_1$-$C_3$alkyl-, $C_1$-$C_3$alkoxy-, chlorine-, sulfo-, methylsulfonyl-, acetylamino-, hydroxyl- and/or carboxyl-substituted phenyl, a is from 1 to 1.5, b is from 1 to 2, c is from 1 to 2 and the sum of (a+b+c) is from 2.5 to 4, which comprises reacting a metal phthalocyaninesulfochloride of the formula

(6) 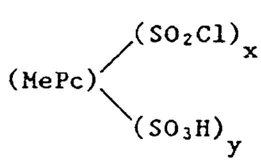 ,

where x is from 2.5 to 4, y is from 0 to 1.5 and (x+y) is from 2.5 to 4, preferably from 2.5 to 3, simultaneously or in succession with amines of the formulae

(7) 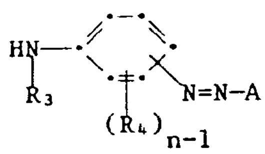

and (8) $HNR_1R_2$,

where $R_1$, $R_2$, $R_3$, $R_4$, A, Me, Pc and n are as defined above, in an aqueous medium at temperatures of 0 to 100°C by maintaining a pH of 5 to 10 and then performing an optional hydrolysis with an acid or an alkaline compound.

**2.** A process according to claim 1, wherein $R_1$ and $R_2$ are identical to or different from one another and are each hydrogen, hydroxyethyl, carboxyalkyl of 1 or 2 carbon atoms in the alkyl radical or phenyl, or $R_1$ and $R_2$, together with the nitrogen atom, form a heterocyclic 5- or 6-membered ring which may contain nitrogen, sulfur and/or oxygen atoms as further hetero atoms, $R_4$ is alkyl or alkoxy each of 1 to 3 carbon atoms, $-NHCOCH_3$, $-NHCOCH_2OH$, $-NHCOC_6H_5$ or sulfo, Me is a coordinatively bonded iron, cobalt, nickel or in particular copper atom, and Pc, $R_3$, a, b, c and n are as defined in claim 1.

**3.** A process according to claim 1 or 2 for preparing a compound of the formula

(3) 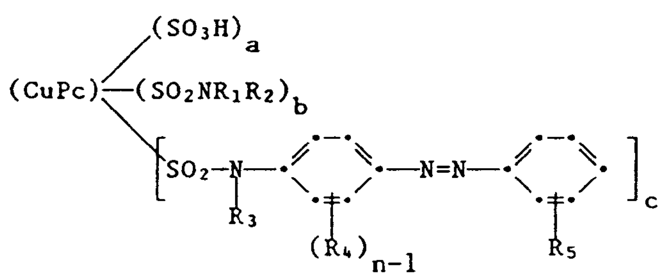 ,

where $R_1$ and $R_2$ are identical or different from one another and are each hydrogen, hydroxyethyl, carboxyalkyl of 1 or 2 carbon atoms in the alkyl radical or phenyl, or $R_1$ and $R_2$, together with the nitrogen atom, form a heterocyclic 5- or 6-membered ring which may contain nitrogen, sulfur and/or oxygen atoms as further hetero atoms, $R_4$ is alkyl or alkoxy each of 1 to 3 carbon atoms, $-NHCOCH_3$, $-NHCOCH_2OH$, $-NHCOC_6H_5$ or sulfo, $R_5$ is alkyl or alkoxy of 1 to 3 carbon atoms, hydroxyl, carboxyl or sulfo, and Pc, $R_3$, a, b, c and n are as defined above.

**4.** A process according to claim 1 or 2 for preparing a compound of the formula

(4) 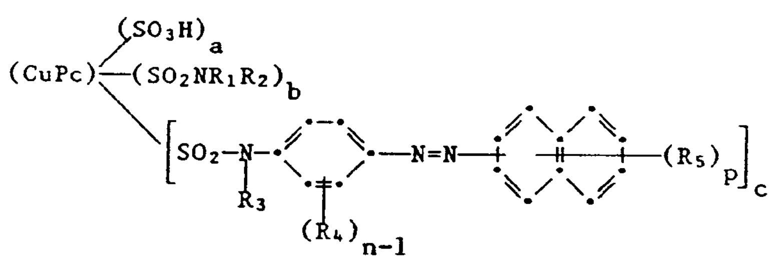

or

(5) 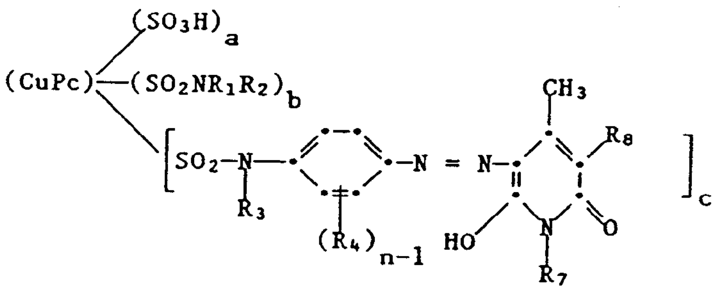

where $R_7$ is alkyl of 1 to 4 carbon atoms, $R_8$ is -CN, $-CONH_2$ or $-CH_2SO_3H$, p is from 1 to 4, and $R_1$, $R_2$, $R_3$, $R_4$, $R_5$, a, b, c and n are as defined in claim 1.

**5.** A process according to any one of claims 1 to 4, wherein a and c are each independently of the other from 1 to 1.2 and b is from 0,5 to 1.

**6.** A process according to claim 1 for preparing a compound of the formula

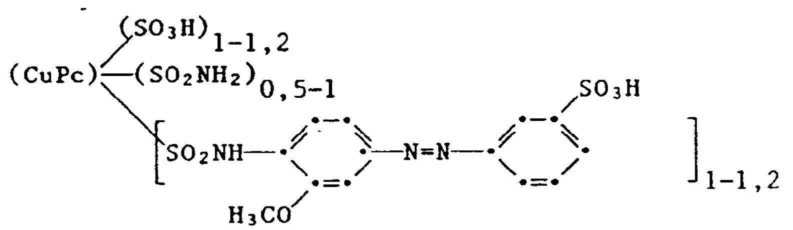 .

**7.** A process according to claim 1 for preparing a compound of the formula

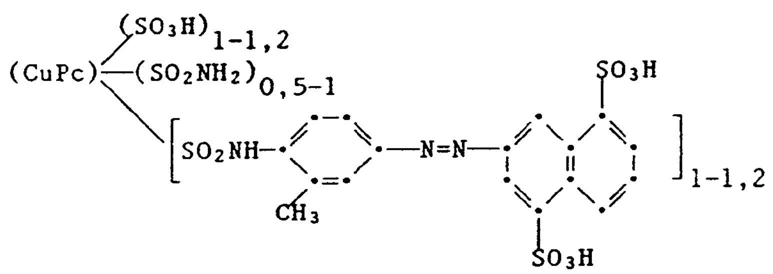 .

**8.** A process according to claim 1 for preparing a compound of the formula

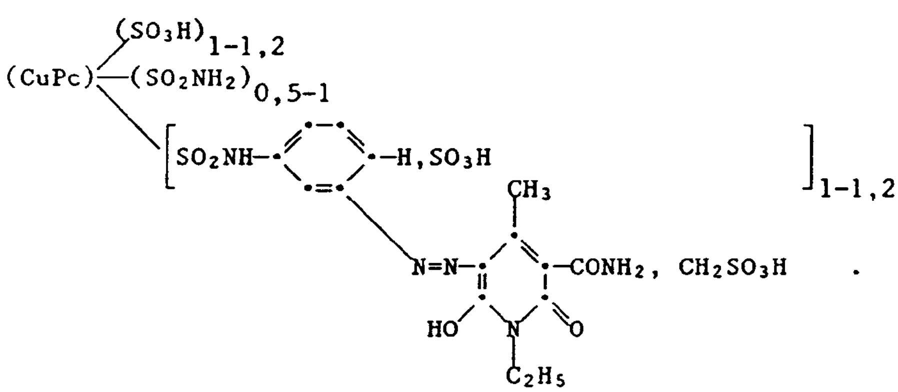 .

**9.** A process for preparing a compound of the formula (1) according to claim 1, which comprises reacting a metal phthalocyaninesulfochloride of the formula

(6) 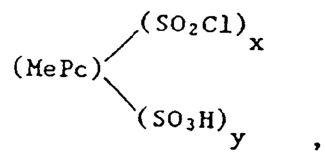

where x is from 2.5 to 4, y is from 0 to 1.5 and (x+y) is from 2.5 to 4, preferably from 2.5 to 3, simultaneously or in succession with amines of the formulae

(9) 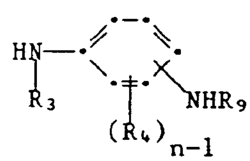

and (8) $HNR_1R_2$,

where $R_9$ is a protective group, for example acetyl, and $R_1$, $R_2$, $R_3$, $R_4$, Me, Pc and n are as defined in claim 1, in an aqueous medium at temperatures of 0 to 100°C by maintaining a pH or 5 to 10, then eliminating the protective group, diazotising the resulting amino group, and subsequently coupling the diazo compound onto a coupling component A.

**10.** The use of a dye prepared by a process according to any one of claims 1 to 9, for dyeing and printing nitrogen-containing and in particular cellulosic fibre materials.

**11.** The use according to claim 11, wherein a blend of synthetic fibres and a cellulosic fibre material, in particular a polyester/cotton blend fabric, is dyed in the presence of a disperse dye for the polyester fibres under the dyeing conditions for polyester fibres.

**12.** A process for dyeing a polyester/cotton blend fabric with a disperse dye and a direct dye, which comprises using in a single-stage, one-bath process apart from the disperse dye a dye of the formula (1) according to claim 1 and dyeing from an aqueous liquor at temperatures within the range from 100 to 150°C, preferably 120 to 130°C, and at a pH between 4 and 7.5.

**Revendications**

**Revendications pour les Etats contractants suivants : BE, DE, CH, FR, GB, IT, LI**

**1.** Composés de formule :

(1) 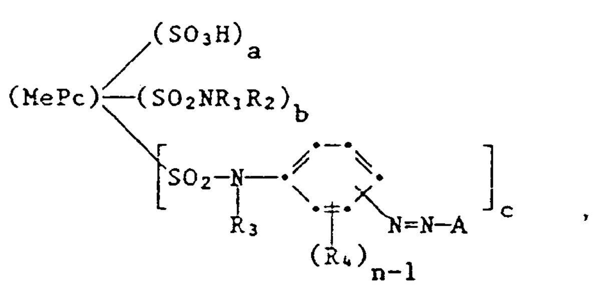

dans laquelle :

$R_1$ et $R_2$ sont identiques ou différents l'un de l'autre et représentent chacun un atome d'hydrogène, un groupe hydroxyalkyle comportant 2 ou 3 atomes de carbone, un groupe carboxyalkyle comportant de 1 à 3 atomes de carbone dans le fragment alkyle ou un groupe phényle, ou bien

$R_1$ et $R_2$ forment conjointement avec l'atome d'azote un noyau hétérocycle comportant éventuel-

lement d'autres hétéroatomes,

$R_3$ représente un atome d'hydrogène ou un groupe méthyle,

$R_4$ représente un atome d'hydrogène, un groupe alkyle ou alcoxy comportant dans chaque cas de 1 à 5 atomes de carbone, un groupe $-NHCOR_6$, où $R_6$ représente un groupe alkyle ou hydroxyalkyle comportant dans chaque cas de 1 à 3 atomes de carbone ou un groupe phényle éventuellement substitué, ou un groupe sulfo,

Me représente un atome de métal lié par coordinence,

Pc représente un reste de phtalocyanine de valence (a+b+c),

n vaut de 1 à 3,

A représente un groupe phényle monosubstitué, un groupe naphtyle, un groupe de formule :

(2) 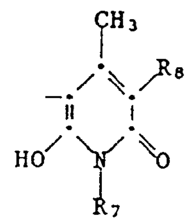

dans laquelle :

$R_7$ représente un groupe alkyle comportant de 1 à 4 atomes de carbone, et

$R_8$ représente un groupe -CN, $-CONH_2$ ou $-CH_2SO_3H$,

ou un groupe de formule :

(2a) 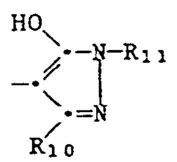

dans laquelle :

$R_{10}$ représente un groupe $-NH_2$, -COOH, méthyle ou éthyle, et

$R_{11}$ représente un groupe 1- ou 2-naphtyle, éventuellement substitué par un ou des groupes sulfo, ou un groupe phényle non-substitué ou portant des substituants alkyle en $C_{1-3}$, alcoxy en $C_{1-3}$, chloro, sulfo, méthylsulfonyle, acétylamino, hydroxy et/ou carboxy,

a vaut de 1 à 1,5,

b vaut de 0,5 à 1,5, et

c vaut de 1 à 2,

la somme (a+b+c) valant de 2,5 à 4.

2. Composés conformes à la revendication 1, caractérisés en ce que :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

Me représente un atome de fer, de cobalt, de nickel ou en particulier de cuivre, lié par coordinence, et

Pc, $R_3$, a, b, c et n ont les significations indiquées dans la revendication 1.

3. Composés conformes à la revendication 1 ou 2, caractérisés en ce qu'ils correspondent à la formule :

(3)

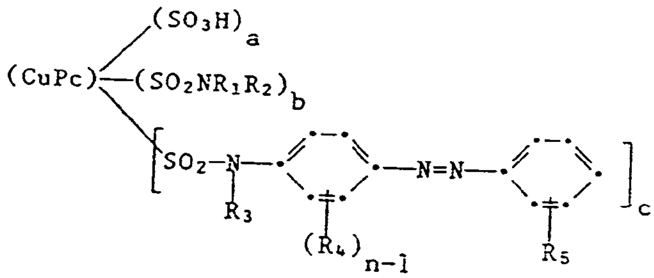

,

dans laquelle :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, oui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

$R_5$ représente un groupe alkyle ou alcoxy comportant de 1 à 3 atomes de carbone, hydroxyle, carboxyle ou sulfo, et

Pc, $R_3$, a, b, c et n ont les significations déjà indiquées.

4. Composés conformes à la revendication 1 ou 2, caractérisés en ce qu'ils correspondent aux formules :

(4)

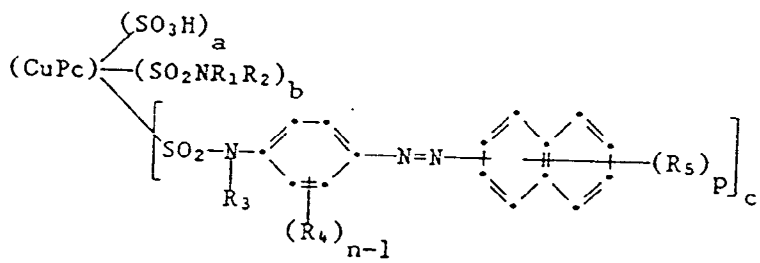

et

(5)

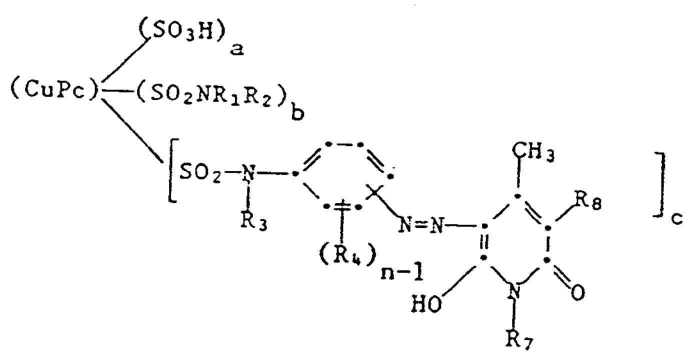

dans lesquelles :

$R_7$ représente un groupe alkyle comportant de 1 à 4 atomes de carbone,

$R_8$ représente -CN, $-CONH_2$ ou $-CH_2SO_3H$,

p vaut de 1 à 4, et

$R_1$, $R_2$, $R_3$, $R_4$, $R_5$, a, b, c, et n ont les significations indiquées dans la revendication 1.

5. Composés conformes à l'une des revendications 1 à 4, caractérisés en ce que a et c valent de 1 à 1,2, indépendamment l'un de l'autre, et en ce que b vaut de 0,5 à 1.

6. Composés conformes à la revendication 1, caractérisés en ce qu'ils correspondent à la formule :

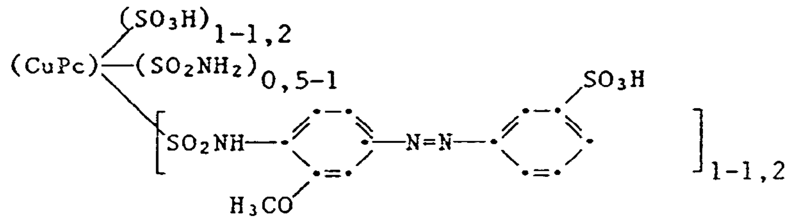

7. Composés conformes à la revendication 1, caractérisés en ce qu'ils correspondent à la formule :

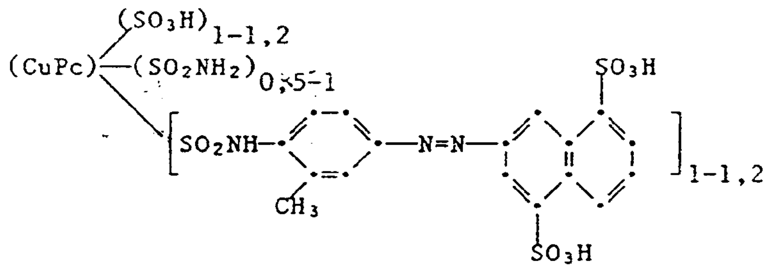

8. Composés conformes à la revendication 1, caractérisés en ce qu'ils correspondent à la formule :

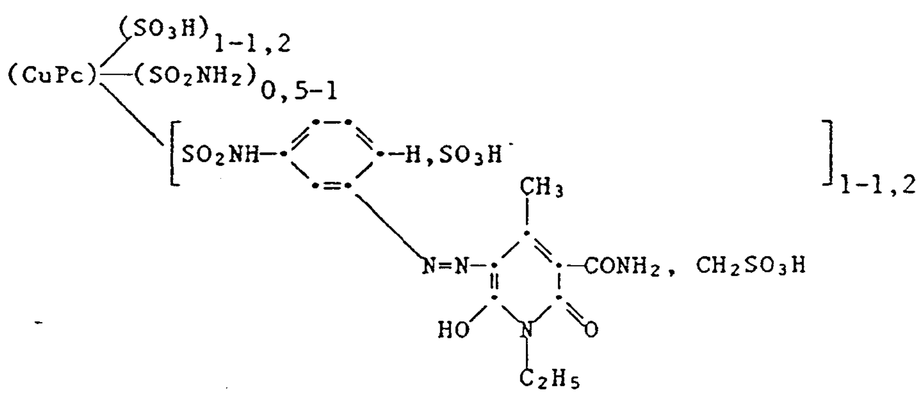

9. Procédé de préparation de composés conformes à la revendication 1, caractérisé en ce que l'on fait réagir un sulfochlorure de phtalocyanine de métal, de formule :

(6) 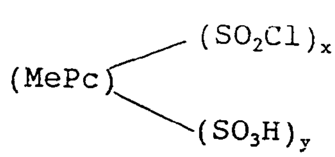

dans laquelle :

x vaut de 2,5 à 4,

y vaut de 0 à 1,5 et la somme (x+y) vaut de 2,5 à 4, de préférence de 2,5 à 3,

simultanément ou successivement, avec des amines de formule :

(7) 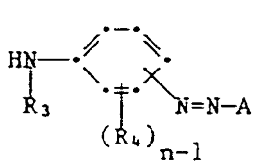

et (8) $HNR_1R_2$,
dans lesquelles :
$R_1$, $R_2$, $R_3$, $R_4$, A, Me, Pc et n ont les significations indiquées dans la revendication 1,
en milieu aqueux et à des températures de 0 à 100°C, tout en maintenant le pH à une valeur de 5 à 10, et en ce que l'on effectue ensuite, éventuellement, une hydrolyse avec un acide ou un composé alcalin.

**10.** Procédé de préparation de composés conformes à la revendication 1, caractérisé en ce que l'on fait réagir un sulfochlorure de phtalocyanine de métal, de formule :

(6)

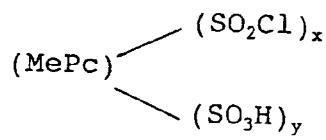

dans laquelle :
x vaut de 2,5 à 4,
y vaut de 0 à 1,5 et la somme (x+y) vaut de 2,5 à 4, de préférence de 2,5 à 3,
simultanément ou successivement, avec des amines de formules :

(9)

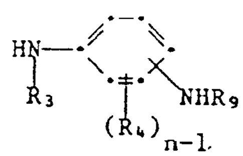

et (8) $HNR_1R_2$,
dans lesquelles :
$R_9$ représente un groupe protecteur, par exemple acétyle, et
$R_1$, $R_2$, $R_3$, $R_4$, Me, Pc et n ont les significations indiquées dans la revendication 1,
en milieu aqueux et à des températures de 0 à 100°C, tout en maintenant le pH à une valeur de 5 à 10, puis on sépare le groupe protecteur, on diazote le groupe amino formé et l'on fait ensuite copuler le composé diazo sur un copulant A.

**11.** Utilisation des colorants conformes à l'une des revendications 1 à 8 ou des colorants préparés selon un procédé conforme à la revendication 9 ou 10, pour la teinture et l'impression de matériaux fibreux azotés et en particulier de matériaux fibreux cellulosiques.

**12.** Utilisation conforme à la revendication 11, caractérisée en ce que l'on teint des mélanges de fibres constitués de fibres synthétiques et de matériaux fibreux cellulosiques, en particulier des tissus mélangés polyester/coton, en présence d'un colorant dispersé pour fibres de polyester, dans les conditions de teinture pour fibres de polyester.

**13.** Procédé de teinture de tissus mélangés polyester/coton avec des colorants dispersés et des colorants directs, caractérisé en ce que l'on utilise, en un procédé en une seule étape et à un seul bain, des colorants de formule (1) conformes à la revendication 1, en plus de colorants dispersés, et en ce que l'on effectue la teinture en bain aqueux à des températures situées dans l'intervalle allant de 100 à 150°C et de préférence de 120 à 130°C, et à un pH situé entre 4 et 7,5.

**Revendications pour l'Etat contractant suivant : ES**

**1.** Procédé de préparation de composés de formule :

(1) 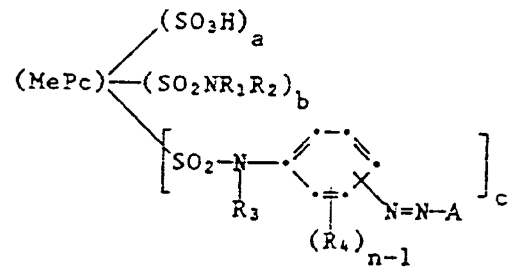 ,

dans laquelle :

$R_1$ et $R_2$ sont identiques ou différents l'un de l'autre et représentent chacun un atome d'hydrogène, un groupe hydroxyalkyle comportant 2 ou 3 atomes de carbone, un groupe carboxyalkyle comportant de 1 à 3 atomes de carbone dans le fragment alkyle ou un groupe phényle, ou bien

$R_1$ et $R_2$ forment conjointement avec l'atome d'azote un noyau hétérocycle comportant éventuellement d'autres hétéroatomes,

$R_3$ représente un atome d'hydrogène ou un groupe méthyle,

$R_4$ représente un atome d'hydrogène, un groupe alkyle ou alcoxy comportant dans chaque cas de 1 à 5 atomes de carbone, un groupe $-NHCOR_6$, où $R_6$ représente un groupe alkyle ou hydroxyalkyle comportant dans chaque cas de 1 à 3 atomes de carbone ou un groupe phényle éventuellement substitué, ou un groupe sulfo,

Me représente un atome de métal lié par coordinence,

Pc représente un reste de phtalocyanine de valence (a+b+c),

n vaut de 1 à 3,

A représente un groupe phényle monosubstitué, un groupe naphtyle, un groupe de formule :

(2) 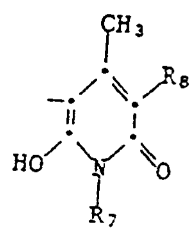

dans laquelle :

$R_7$ représente un groupe alkyle comportant de 1 à 4 atomes de carbone, et

$R_8$ représente un groupe -CN, $-CONH_2$ ou $-CH_2SO_3H$,

ou un groupe de formule :

(2a) 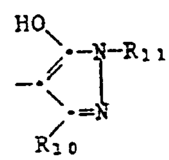

dans laquelle :

$R_{10}$ représente un groupe $-NH_2$, -COOH, méthyle ou éthyle, et

$R_{11}$ représente un groupe 1- ou 2-naphtyle, éventuellement substitué par un ou des groupes sulfo, ou un groupe phényle non-substitué ou portant des substituants alkyle en $C_{1-3}$, alcoxy en $C_{1-3}$, chloro, sulfo, méthylsulfonyle, acétylamino, hydroxy et/ou carboxy,

a vaut de 1 à 1,5,

b vaut de 1 à 2, et

c vaut de 1 à 2,

la somme (a+b+c) valant de 2,5 à 4,
caractérisé en ce que l'on fait réagir un sulfochlorure de phtalocyanine de métal, de formule :

(6) 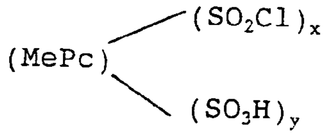

dans laquelle :

x vaut de 2,5 à 4,

y vaut de 0 à 1,5 et la somme (x+y) vaut de 2,5 à 4, de préférence de 2,5 à 3,

simultanément ou successivement, avec des amines de formule :

(7) 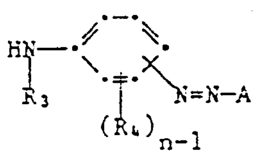

et (8) $HNR_1R_2$,
dans lesquelles :
$R_1$, $R_2$, $R_3$, $R_4$, A, Me, Pc et n ont les significations indiquées ci-dessus,
en milieu aqueux et à des températures de 0 à 100°C, tout en maintenant le pH à une valeur de 5 à 10, et en ce que l'on effectue ensuite, éventuellement, une hydrolyse avec un acide ou un composé alcalin.

**2.** Procédé conforme à la revendication 1, caractérisé en ce que :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

Me représente un atome de fer, de cobalt, de nickel ou en particulier de cuivre, lié par coordinence, et

Pc, $R_3$, a, b, c et n ont les significations indiquées dans la revendication 1.

**3.** Procédé conforme à la revendication 1 ou 2, caractérisé en ce qu'il correspond à la formule :

(3) 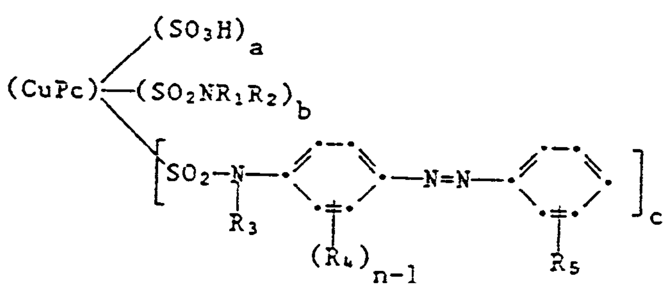 ,

dans laquelle :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de

carbone, un groupe $-NHCOCH_3$, $-NHCOCH_2OH$, ou $-NHCOC_6H_5$, ou encore un groupe sulfo,

$R_5$ représente un groupe alkyle ou alcoxy comportant de 1 à 3 atomes de carbone, hydroxyle, carboxyle ou sulfo, et

Pc, $R_3$, a, b, c et n ont les significations déjà indiquées.

**4.** Procédé conforme à la revendication 1 ou 2, pour la préparation de composés de formules :

(4)

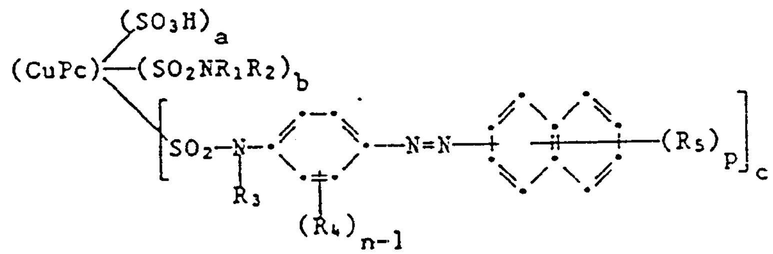

et

(5)

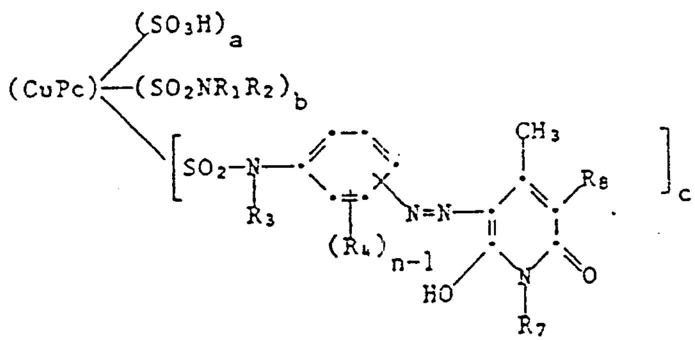

dans lesquelles :

$R_7$ représente un groupe alkyle comportant de 1 à 4 atomes de carbone,

$R_8$ représente -CN, $-CONH_2$ ou $-CH_2SO_3H$,

p vaut de 1 à 4, et

$R_1$, $R_2$, $R_3$, $R_4$, $R_5$, a, b, c, et n ont les significations indiquées dans la revendication 1.

**5.** Procédé conforme à l'une des revendications 1 à 4, caractérisé en ce que a et c valent de 1 à 1,2, indépendamment l'un de l'autre, et en ce que b vaut de 0,5 à 1.

**6.** Procédé conforme à la revendication 1, pour la préparation de composés de formule :

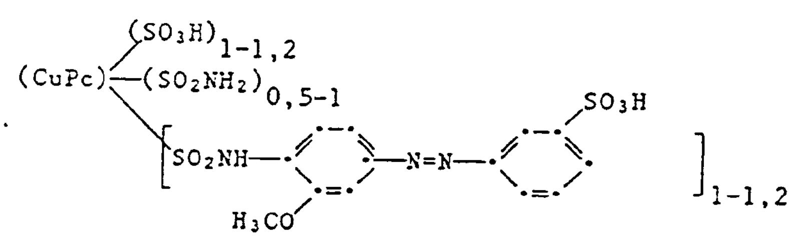

**7.** Procédé conforme à la revendication 1, pour la préparation de composés de formule :

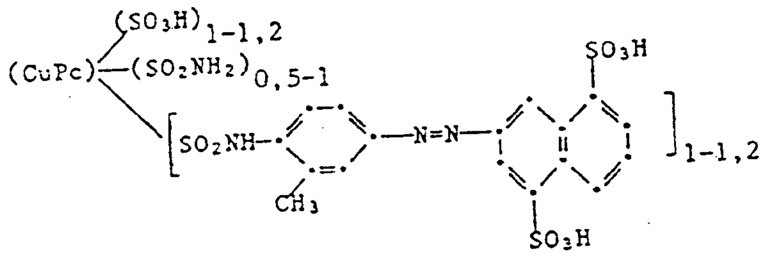

8. Procédé conforme à la revendication 1, pour la préparation de composés de formule :

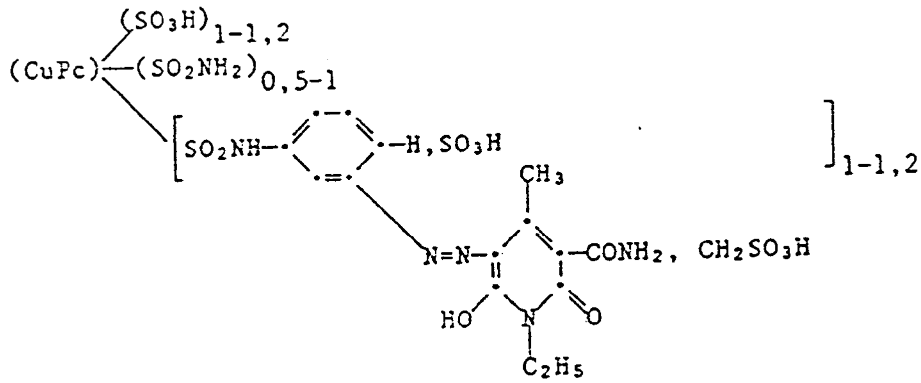

9. Procédé de préparation de composés de formule 1, conforme à la revendication 1, caractérisé en ce que l'on fait réagir un sulfochlorure de phtalocyanine de métal, de formule :

(6) 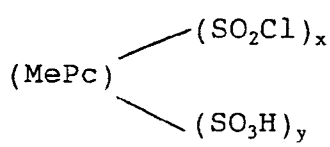

dans laquelle :

x vaut de 2,5 à 4,

y vaut de 0 à 1,5 et la somme (x+y) vaut de 2,5 à 4, de préférence de 2,5 à 3,

simultanément ou successivement, avec des amines de formules :

(9) 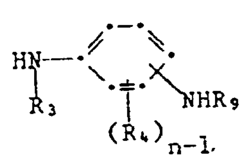

et (8) $HNR_1R_2$,

dans lesquelles :

$R_9$ représente un groupe protecteur, par exemple acétyle, et

$R_1$, $R_2$, $R_3$, $R_4$, Me, Pc et n ont les significations indiquées dans la revendication 1,

en milieu aqueux et à des températures de 0 à 100°C, tout en maintenant le pH à une valeur de 5 à 10, puis on sépare le groupe protecteur, on diazote le groupe amino formé et l'on fait ensuite copuler le composé diazo sur un copulant A.

10. Utilisation des colorants préparés selon un procédé conforme aux revendications 1 à 9, pour la teinture et l'impression te matériaux fibreux azotés et en particulier de matériaux fibreux cellulosiques.

11. Utilisation conforme à la revendication 10, caractérisée en ce que l'on teint des mélanges de fibres constitués de fibres synthétiques et de matériaux fibreux cellulosiques, en particulier des tissus mélangés polyester/ coton, en présence d'un colorant dispersé pour fibres de polyester, dans les conditions de teinture pour fibres de polyester.

12. Procédé de teinture de tissus mélangés polyester/coton avec des colorants dispersés et des colorants directs, caractérisé en ce que l'on utilise, en un procédé en une seule étape et à un seul bain, des colorants de formule (1) conformes à la revendication 1, en plus de colorants dispersés, et en ce que l'on effectue la teinture en bain aqueux à des températures situées dans l'intervalle allant de 100 à 150°C et de préférence de 120 à 130°C, et à un pH situé entre 4 et 7,5.